(19) **Europäisches Patentamt / European Patent Office / Office européen des brevets**

(11) **EP 4 572 258 A1**

(12) **EUROPEAN PATENT APPLICATION**
published in accordance with Art. 153(4) EPC

(43) Date of publication:
**18.06.2025 Bulletin 2025/25**

(21) Application number: **22954648.6**

(22) Date of filing: **12.08.2022**

(51) International Patent Classification (IPC):
**H04L 27/00** *(2006.01)*

(52) Cooperative Patent Classification (CPC):
**H04L 27/00**

(86) International application number:
**PCT/CN2022/112293**

(87) International publication number:
**WO 2024/031696 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **JIANG, Qinyan
  Beijing 100022 (CN)**
• **ZHANG, Lei
  Beijing 100022 (CN)**
• **WANG, Xin
  Beijing 100022 (CN)**

(74) Representative: **Haseltine Lake Kempner LLP
Cheapside House
138 Cheapside
London EC2V 6BJ (GB)**

(54) **CHANNEL STATE INFORMATION REPORTING METHOD AND APPARATUS**

(57) Embodiments of the present disclosure provide a method and an apparatus for reporting channel state information, the method including: a terminal equipment receives a DCI format for scheduling a PUSCH on one or more than one cell and/or uplink carrier, the DCI format requesting or triggering aperiodic CSI reporting; and the terminal equipment transmits a CSI report. According to the embodiments of the present disclosure, aperiodic CSI reporting and PUSCH-based semi-persistent CSI reporting are realized in a case where the DCI format can schedule PUSCHs of multiple cells.

401

a terminal equipment receives a DCI format for scheduling a PUSCH on one or more than one cell and/or uplink carrier, the DCI format requesting or triggering aperiodic CSI reporting

402

the terminal equipment transmits a CSI report

**FIG. 4**

EP 4 572 258 A1

**Description**

TECHNICAL FIELD

Embodiments of the present disclosure relate to the technical field of communications.

BACKGROUND

A physical downlink shared channel (PDSCH) is one of physical downlink channels in a wireless communication system, and is used to carry downlink data. A physical uplink shared channel (PUSCH) is one of physical uplink channels in a wireless communication system, and is used to carry uplink data. The PDSCH and the PUSCH may be scheduled via downlink control information (DCI). In a current new radio (NR) system, a plurality of DCI formats for scheduling the PDSCH or PUSCH are defined, specific information and/or size included in different DCI formats are different, to meet different scheduling demands.

It should be noted that the above introduction to the technical background is just to facilitate a clear and complete description of the technical solutions of the present disclosure, and is elaborated to facilitate the understanding of persons skilled in the art, it cannot be considered that these technical solutions are known by persons skilled in the art just because these solutions are elaborated in the Background of the present disclosure.

SUMMARY OF INVENTION

The inventor finds that currently, DCI format 0_1 and DCI format 0_2 may be used to trigger/activate/deactivate aperiodic CSI report and PUSCH-based SP CSI report, and, both DCI format 0_1 and DCI format 0_2 may only schedule PUSCHs of one cell (or uplink carrier). In the standardization work of Rel-18 NR that has just started, as one of the goals of multi-carrier enhancement, how to further support scheduling of PUSCHs of multiple cells (or uplink carriers) via one DCI will be taken into account, so as to reduce resource overhead of the DCI and improve a system throughput. This DCI that supports scheduling of multiple cells (or uplink carriers) may be a new DCI format (such as DCI format 0_3, but not limited to this) or an enhancement of an existing DCI format (such as DCI format 0_1 and DCI format 0_2).

However, since existing methods for triggering/activating/deactivating aperiodic CSI report and PUSCH-based SP CSI report are designed based on an assumption that a DCI format may only schedule PUSCHs of one cell (or uplink carrier), it cannot be directly applied to a situation in which the DCI format may schedule PUSCHs of multiple cells (or uplink carriers).

For at least one of the above problems, the embodiments of the present disclosure provide a method and an apparatus for reporting channel state information, to support aperiodic CSI reporting and PUSCH-based semi-persistent CSI reporting in a case where the DCI format can schedule PUSCHs of multiple cells (or uplink carriers).

According to an aspect of the embodiments of the present disclosure, an apparatus for reporting aperiodic CSI is provided, the apparatus comprising:

a receiving unit configured to receive a DCI format for scheduling a PUSCH on one or more cells and/or uplink carriers, the DCI format requesting or triggering aperiodic CSI reporting; and
a transmitting unit configured to transmit a CSI report.

According to another aspect of the embodiments of the present disclosure, an apparatus for receiving a CSI report is provided, the apparatus comprising:

a transmitting unit configured to transmit a DCI format for scheduling a PUSCH on one or more cells and/or uplink carriers, the DCI format requesting or triggering aperiodic CSI reporting; and
a receiving unit configured to receive a CSI report.

According to a further aspect of the embodiments of the present disclosure, an apparatus for reporting semi-persistent CSI is provided, the apparatus comprising:

a receiving unit configured to receive a DCI format for scheduling a PUSCH on one or more cells and/or uplink carriers, the DCI format triggering or activating semi-persistent CSI reporting; and
a transmitting unit configured to transmit a CSI report.

According to another aspect of the embodiments of the present disclosure, an apparatus for receiving a CSI report is provided, the apparatus comprising:

a transmitting unit configured to transmit a DCI format for scheduling a PUSCH on one or more cells and/or uplink carriers, the DCI format triggering or activating semi-persistent CSI reporting; and
a receiving unit configured to receive a CSI report.

According to a further aspect of the embodiments of the present disclosure, an apparatus for releasing or deactivating semi-persistent CSI reporting is provided, the apparatus comprising:

a receiving unit configured to receive a DCI format for scheduling a PUSCH on one or more cells and/or uplink carriers, the DCI format releasing or deactivating semi-persistent CSI reporting; and
a processing unit configured to deactivate semi-persistent CSI reporting.

According to a further aspect of the embodiments of the present disclosure, an apparatus for releasing or deactivating semi-persistent CSI reporting is provided, the apparatus comprising:
a transmitting unit configured to transmit a DCI format for scheduling a PUSCH on one or more cells and/or uplink carriers, the DCI format releasing or deactivating semi-persistent CSI reporting.

One of advantageous effects of the embodiments of the present disclosure lies in: according to the embodiments of the present disclosure, aperiodic CSI reporting and PUSCH-based semi-persistent CSI reporting are realized in a case where the DCI format can schedule PUSCHs of multiple cells.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

FIG. 1 is a schematic diagram of a communication system in the embodiments of the present disclosure;
FIG. 2 is a schematic diagram of a timing relationship of aperiodic CSI reporting;
FIG. 3 is a schematic diagram of a timing relationship of PUSCH-based SP CSI reporting;
FIG. 4 is a schematic diagram of a method for reporting aperiodic CSI in the embodiments of the present disclosure;
FIG. 5 to FIG. 12 are schematic diagrams of examples of aperiodic CSI reporting;
FIG. 13 is a schematic diagram of a method for receiving a CSI report in the embodiments of the present disclosure;
FIG. 14 is a schematic diagram of a method for reporting semi-persistent CSI in the embodiments of the present disclosure;
FIG. 15 to FIG. 22 are schematic diagrams of examples of semi-persistent CSI reporting;
FIG. 23 is a schematic diagram of a method for receiving a CSI report in the embodiments of the present disclosure;
FIG. 24 is a schematic diagram of a method for releasing or deactivating semi-persistent CSI reporting in the embodiments of the present disclosure;
FIG. 25 is a schematic diagram of a method for releasing or deactivating semi-persistent CSI reporting in the embodiments of the present disclosure;
FIG. 26 is a schematic diagram of an apparatus for reporting aperiodic CSI in the embodiments of the present disclosure;
FIG. 27 is a schematic diagram of an apparatus for receiving a CSI report in the embodiments of the present disclosure;
FIG. 28 is a schematic diagram of an apparatus for reporting semi-persistent CSI in the embodiments of the present disclosure;
FIG. 29 is a schematic diagram of an apparatus for receiving a CSI report in the embodiments of the present disclosure;
FIG. 30 is a schematic diagram of an apparatus for releasing or deactivating semi-persistent CSI reporting in the embodiments of the present disclosure;

FIG. 31 is a schematic diagram of an apparatus for releasing or deactivating semi-persistent CSI reporting in the embodiments of the present disclosure;

FIG. 32 is a schematic diagram of composition of a terminal equipment in the embodiments of the present disclosure;

FIG. 33 is a schematic diagram of composition of a network device in the embodiments of the present disclosure.

DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), High-Speed Packet Access (HSPA), 5 Generation (5G) New Radio (NR) and so on.

And, communication between devices in a communication system can be carried out according to a communication protocol at any stage, for example may include but be not limited to the following communication protocols: 1G, 2G, 2.5G, 2.75G, 3G, 4G, 4.5G, 5G new radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described through the following examples, however the present disclosure is not limited to these.

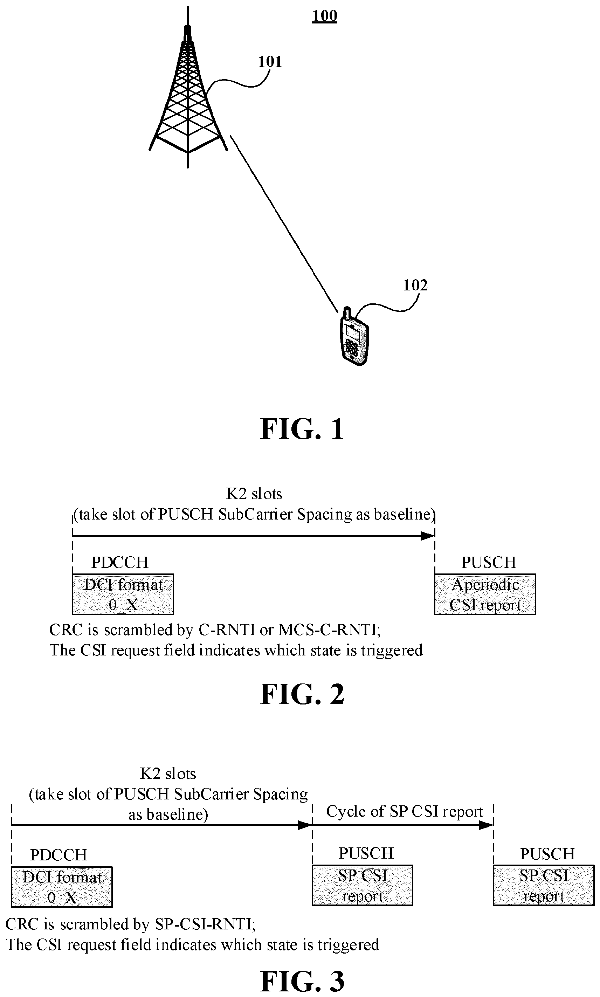

FIG. 1 is a schematic diagram of a communication system in the embodiments of the present disclosure, schematically describes situations by taking a terminal equipment and a network device as examples, as shown in FIG. 1, a communication system 100 may include a network device 101 and a terminal equipment 102. For simplicity, FIG. 1 only takes one network device and one terminal equipment as examples for description, however the embodiments of the present disclosure are not limited to this.

In the embodiments of the present disclosure, transmission of existing or further implementable services can be carried out between the network device 101 and the terminal equipment 102. For example, these services may include but be not limited to: enhanced Mobile Broadband (eMBB), massive Machine Type Communication (mMTC), Ultra-Reliable and Low-Latency Communication (URLLC) and so on.

In NR, a general process for a UE to report CSI includes the following steps:

A gNB transmits a CSI-RS and/or SSB;

The UE measures the CSI-RS and/or a DMRS of a PBCH (in the SSB), including channel state measurement, interference measurement, L1-RSRP measurement, etc., and then the UE reports a measurement result to the gNB;

The gNB performs beam management and scheduling, etc. according to the CSI measurement result reported by UE.

In NR, a CSI general framework includes CSI resource setting and CSI reporting setting. The CSI resource setting defines a structure of the CSI-RS, an occupied bandwidth, time domain characteristics (periodic, semi-persistent, aperiodic), etc. The CSI reporting setting defines CSI resource setting associated with a measurement report, time domain characteristics of the report (periodic, semi-persistent, aperiodic), the number of reports, and frequency domain configuration of the report, etc.

Currently, CSI report types include periodic CSI reporting, aperiodic CSI reporting, semi-persistent (SP) CSI reporting on a PUCCH and semi-persistent CSI reporting on a PUSCH. Both the aperiodic CSI reporting and the SP CSI reporting on a PUSCH are triggered or activated by a DCI format, and a CSI report is transmitted on a PUSCH.

The inventor finds that since existing methods for triggering/activating/deactivating aperiodic CSI report and PUSCH-based SP CSI report are designed based on an assumption that a DCI format may only schedule PUSCHs of one cell (or uplink carrier), it cannot be directly applied to a situation in which the DCI format may schedule PUSCHs of multiple cells (or uplink carriers).

For at least one of the above problems, the embodiments of the present disclosure provide a method and an apparatus for reporting channel state information.

In the embodiments of the present disclosure, DCI format 0_X refers to a DCI format for supporting scheduling of PUSCHs of multiple cells (or uplink carriers) via one DCI. There is no restriction on a name of this DCI format, which may be DCI format 0_1, and/or DCI format 0_2, and/or DCI format 0_3, etc.

For example, a network device configures a cell that may be scheduled by DCI format 0_X via higher-layer signaling or parameters. For example, DCI format 0_X includes a field for indicating a cell and/or an uplink carrier. According to configuration of higher-layer signaling or parameters, a value of this field corresponds to one or more cells and/or uplink carriers, respectively. Thereby, when this field indicates multiple cells and/or uplink carriers, scheduling of multiple cells and/or uplink carriers via one DCI may be realized.

In some embodiments, DCI format 0_X includes one or more fields for indicating a cell and/or an uplink carrier.

In some embodiments, one cell may be configured with one uplink carrier, i.e. (N)UL ((normal)UL), or two uplink carriers, i.e. (N)UL and SUL (supplementary UL).

In some embodiments, DCI format 0_X includes both a field for indicating a cell and a field for indicating an uplink carrier. That is to say, the above field for indicating a cell and/or uplink carrier may include a field for indicating a cell and a field for indicating an uplink carrier in a cell. For example, if one or more cells in cells that may be scheduled by DCI format 0_X include two uplink carriers (such as (N)UL and SUL), DCI format 0_X may include one or more fields (such as carrier indicator) for indicating a cell, and one or more fields (such as UL-SUL indicator) for indicating uplink carriers in a cell, to indicate that a scheduled PUSCH is on which uplink carrier. In a case that multiple fields for indicating uplink carriers in a cell are included, different fields for indicating uplink carriers in a cell correspond to different cells or different cell sets/cell groups.

In some embodiments, DCI format 0_X only includes one field for indicating a cell and/or an uplink carrier. For example, if a cell in cells that may be scheduled by DCI format 0_X only includes one uplink carrier, DCI format 0_X may only include a field for indicating a cell, or, only include a field for indicating an uplink carrier. The reason is that in this situation, indicating a cell is equivalent to indicating an uplink carrier of the cell.

In the embodiments of the present disclosure, "scheduling a cell and/or uplink carrier" is equivalent to "scheduling uplink transmission (such as a PUSCH) on the cell and/or uplink carrier".

In the embodiments of the present disclosure, "more" refers to more than one, or two or more.

In the embodiments of the present disclosure, "DCI format 0_X is scrambled by an RNTI" includes "a CRC (cyclic redundancy check) bit of this DCI format is scrambled by this RNTI".

In the embodiments of the present disclosure, the DCI format "for scheduling a PUSCH on one or more than one cell and/or uplink carrier" refers to that: the DCI format at least may/can/is able to once/simultaneously schedule a PUSCH on more than one cell and/or uplink carrier, there is one or more than one scheduled PUSCH on the more than one cell and/or uplink carrier respectively; and the DCI format may/can/is able to once schedule a PUSCH on one cell and/or uplink carrier, there is one or more than one scheduled PUSCH on the one cell and/or uplink carrier; or refers to that: the DCI format at least may/can/is able to once/simultaneously schedule a PUSCH on more than one cell and/or uplink carrier, there is one or more than one scheduled PUSCH on the more than one cell and/or uplink carrier respectively; and the DCI format may not/cannot/is not able to once only schedule a PUSCH on one cell and/or uplink carrier.

The embodiments of the present disclosure are described below in conjunction with the drawings and the specific implementations.

Embodiments of a first aspect

The embodiments of the present disclosure provide a method for reporting aperiodic CSI, applied in a terminal equipment side.

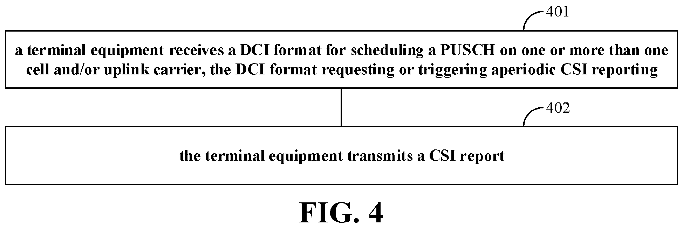

FIG. 4 is a schematic diagram of a method for reporting aperiodic CSI in the embodiments of the present disclosure, as shown in FIG. 4, the method includes:

401, a terminal equipment receives a DCI format for scheduling a PUSCH on one or more than one cell and/or uplink carrier, the DCI format requesting or triggering aperiodic CSI reporting; and
402, the terminal equipment transmits a CSI report.

It should be noted that the above FIG. 4 is only schematic description of the embodiments of the present disclosure, by taking the terminal equipment as an example, but the present disclosure is not limited to this. For example, an execution order of each operation may be adjusted appropriately, moreover some other operations may be increased or operations therein may be reduced. In addition, objects of the above operations may further be adjusted. Persons skilled in the art may make appropriate modifications according to the above contents, not limited to the records in the above FIG. 4.

According to the embodiments of the present disclosure, aperiodic CSI reporting is realized in a case where the DCI format can schedule PUSCHs of multiple cells.

In the above embodiments, aperiodic CSI reporting based on DCI format 0_X includes the following steps:

A base station configures one or more trigger states (a trigger state list) via higher-layer signaling or parameter (such as CSI-AperiodicTriggerStateList), each trigger state corresponds to or is associated with one or more CSI report configurations;
A UE monitors DCI format 0_X and determines which trigger state (CSI aperiodic trigger state) is triggered according to a value of a CSI request field therein.

In addition, possible CSI-RS configuration of the aperiodic CSI reporting includes an aperiodic CSI-RS, a periodic CSI-RS, and a semi-persistent CSI-RS. A timing relationship of the aperiodic CSI reporting is shown in FIG. 2 in which a reference signal for measurement is omitted.

In this embodiment, the trigger state refers to a CSI aperiodic trigger state, and the CSI reporting refers to aperiodic CSI reporting.

In the embodiments of the present disclosure, the higher-layer parameter for configuring a trigger state list is DCI format 0_X specific or shared by a DCI format 0_X and another DCI format. "Specific" means only for DCI format 0_X. "Shared" means that in a case where monitoring another DCI format for triggering aperiodic CSI reporting is configured, for the another DCI format, the higher-layer parameter is for DCI format 0_X and the another DCI format simultaneously or not simultaneously. "Simultaneously" means that in a case where monitoring DCI format 0_X (and DCI format 0_X is used to trigger aperiodic CSI reporting) and another DCI format for triggering aperiodic CSI reporting is configured, the higher-layer parameter is for both DCI format 0_X and the another DCI format. "Not simultaneously" means that the two DCI formats cannot be configured to both need to be monitored, or cannot be configured to both need to be monitored and both are used to trigger aperiodic CSI reporting, thereby the higher-layer parameter is only for DCI format 0_X or the another DCI format in a specific DCI format configuration situation, and will not be for both DCI format 0_X and the another DCI format simultaneously.

In the embodiments of the present disclosure, in some embodiments, the DCI format schedules a PUSCH on one cell and/or uplink carrier, and the terminal equipment transmits the CSI report on the one cell and/or uplink carrier.

In some other embodiments, in a case where the DCI format requests or triggers aperiodic CSI reporting, the DCI format only schedules a PUSCH on one cell and/or uplink carrier. Thereby, the terminal equipment may transmit the CSI reports on this one cell and/or uplink carrier. As a result, an existing method may be reused to the maximum extent, complexity is reduced, and the equipment upgrade cost is reduced.

For example, the DCI format includes a field (or information field) for requesting or triggering CSI reporting, such as a CSI request field, a value of this field corresponds to a CSI aperiodic trigger state. When the value of this field corresponds to one CSI aperiodic trigger state, the DCI format only schedules a PUSCH on one cell and/or uplink carrier, and the terminal device transmits a corresponding CSI report on the PUSCH of the one cell and/or uplink carrier.

In the above embodiments, a length of the CSI request field is $N_{TS}$ (i.e., including $N_{TS}$ bits) and is configured by the network device via a higher-layer parameter (e.g. *reportTriggerSize*), up to $2^{N_{TS}}-1$ aperiodic trigger states may be indicated. When the number of CSI aperiodic trigger states configured by the network device via the higher-layer signaling or parameter does not exceed $2^{N_{TS}}-1$, the CSI request field directly indicates which state is requested. When the number of CSI aperiodic trigger states configured by the network device via the higher-layer signaling or parameter exceeds $2^{N_{TS}}-1$, the network device further selects no more than $2^{N_{TS}}-1$ CSI aperiodic trigger states via a MAC CE (for example, an aperiodic CSI trigger state subselection MAC CE), then the CSI request field indicates which state is requested. There is a delay between the terminal equipment receives the MAC CE command and the command is taken effect. If HARQ-ACK corresponding to a PDSCH carrying the MAC CE is transmitted on slot n, an effective slot for the CSI aperiodic trigger state selection is $n + 3N_{slot}^{subframe,\mu} + 1$.

In the above embodiments, in some implementations, a length of the CSI request field is configured by a higher-layer parameter that may be DCI format 0_X specific or shared by a DCI format 0_X and another DCI format. "Specific" means only for DCI format 0_X. "Shared" means that in a case where monitoring another DCI format for triggering CSI reporting is configured, for the another DCI format, the higher-layer parameter is for DCI format 0_X and the another DCI format simultaneously or not simultaneously. "Simultaneously" means that in a case where monitoring DCI format 0_X (and DCI format 0_X is used to trigger CSI reporting) and another DCI format for triggering CSI reporting is configured, the higher-layer parameter is for both DCI format 0_X and the another DCI format. "Not simultaneously" means that the two DCI formats cannot be configured to both need to be monitored, or cannot be configured to both need to be monitored and both are used to trigger CSI reporting, thereby the higher-layer parameter is only for DCI format 0_X or the another DCI format in a specific DCI format configuration situation, and will not be for both DCI format 0_X and the another DCI format simultaneously.

In the above embodiments, in some other implementations, the length of the CSI request field is not determined by a higher-layer parameter, but is determined by the terminal equipment according to the number of trigger states in a corresponding configured trigger state list.

In some further embodiments, the DCI format includes a field for indicating a cell and/or an uplink carrier, the field indicating one cell and/or uplink carrier; the terminal equipment transmits a CSI report on the cell and/or uplink carrier indicated in this field.

For example, DCI format 0_X includes a field for indicating a cell and/or an uplink carrier, such as a carrier indication field, which may indicate one or more cells and/or uplink carriers. This field only indicates one cell and/or uplink carrier when DCI format 0_X requests or triggers aperiodic CSI reporting.

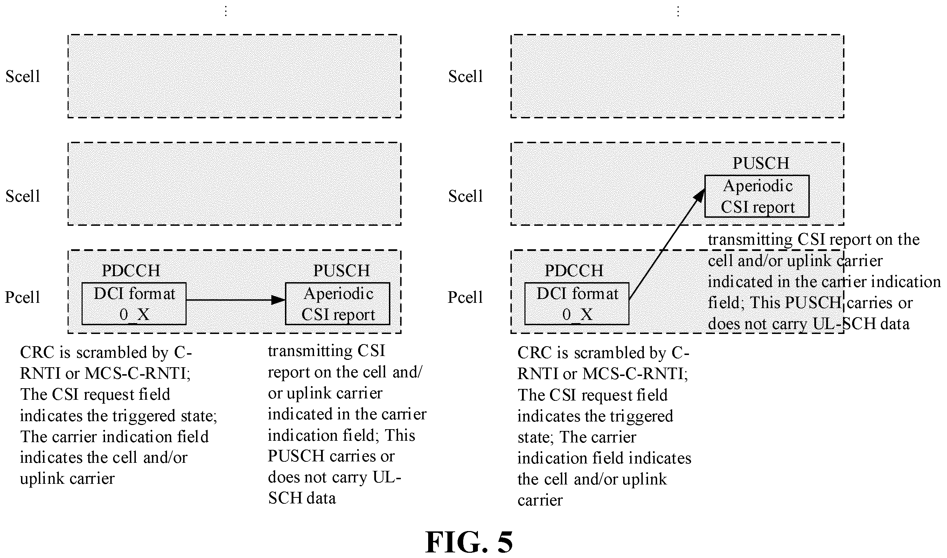

FIG. 5 is a schematic diagram of an example of aperiodic CSI reporting.

As shown in FIG. 5, in this example, the CRC of DCI format 0_X is scrambled by a C-RNTI or a MCS-C-RNTI, the CSI request field indicates a triggered state, the carrier indication field indicates a cell and/or uplink carrier, the left side of FIG. 5 shows a situation in which the indicated cell is a Pcell, the right side of FIG. 5 shows a situation in which the indicated cell is a Scell, and the terminal equipment may transmit a CSI report on a cell and/or uplink carrier indicated in the carrier indication field. In this example, the PUSCH carries or does not carry UL-SCH data.

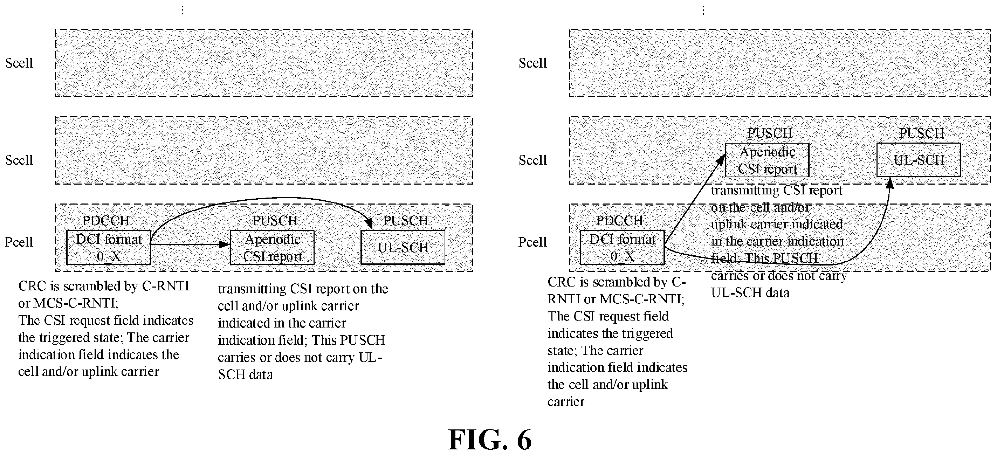

FIG. 6 is a schematic diagram of another example of aperiodic CSI reporting.

As shown in FIG. 6, in this example, the CRC of DCI format 0_X is scrambled by a C-RNTI or a MCS-C-RNTI, the CSI request field indicates a triggered state, the carrier indication field indicates a cell and/or uplink carrier, the left side of FIG. 6 shows a situation in which the indicated cell is a Pcell, the right side of FIG. 6 shows a situation in which the indicated cell is a Scell, and the terminal equipment may transmit a CSI report on a cell and/or uplink carrier indicated in the carrier indication field. In this example, the PUSCH carries or does not carry UL-SCH data. In this example, unlike the example in FIG. 5, DCI format 0_X schedules two PUSCHs.

In some other embodiments, the terminal equipment transmits a CSI report on a cell and/or uplink carrier that is default or configured by signaling and used for transmitting the CSI report.

In the above embodiments, in some implementations, the DCI format includes a field for indicating a cell and/or uplink carrier, the field does not indicate a cell and/or uplink carrier.

For example, DCI format 0_X includes a field for indicating a scheduled cell and/or an uplink carrier, such as a carrier indication field, which may indicate one or more cells and/or uplink carriers. This field does not indicate a cell and/or uplink carrier when DCI format 0_X requests or triggers aperiodic CSI reporting. For example, a bit of this field is set to be a specific value that does not correspond to any cell and/or uplink carrier. The terminal equipment transmits a CSI report on a cell and/or uplink carrier that is default or configured by signaling (such as RRC and/or MAC CE and/or DCI, etc.) and used for transmitting the CSI report.

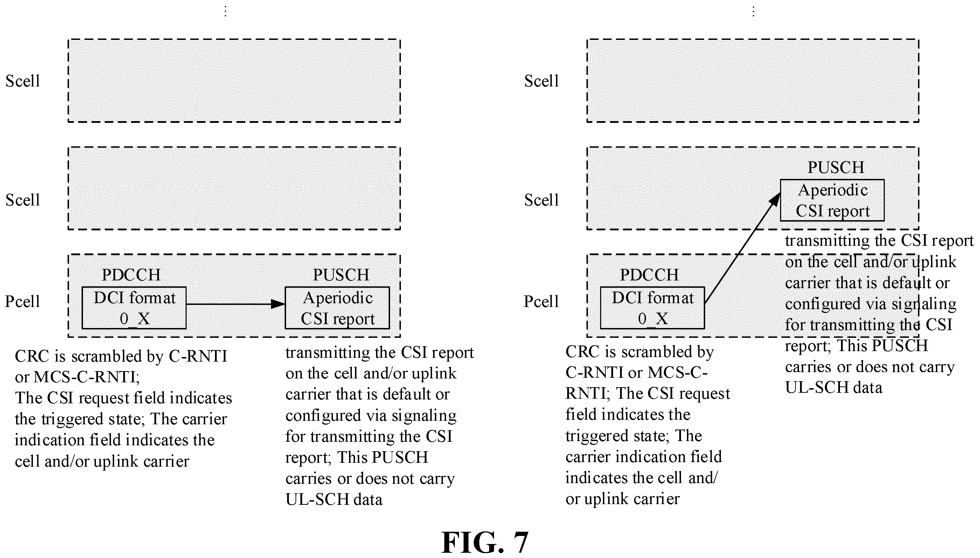

FIG. 7 is a schematic diagram of an example of aperiodic CSI reporting.

As shown in FIG. 7, in this example, the CRC of DCI format 0_X is scrambled by a C-RNTI or a MCS-C-RNTI, the CSI request field indicates a triggered state, the carrier indication field does not indicate a cell and/or uplink carrier, the left side of FIG. 7 shows a situation in which the indicated cell is a Pcell, the right side of FIG. 7 shows a situation in which the indicated cell is a Scell, and the terminal equipment may transmit a CSI report on a cell and/or uplink carrier that is default or configured by signaling. In this example, the PUSCH carries or does not carry UL-SCH data.

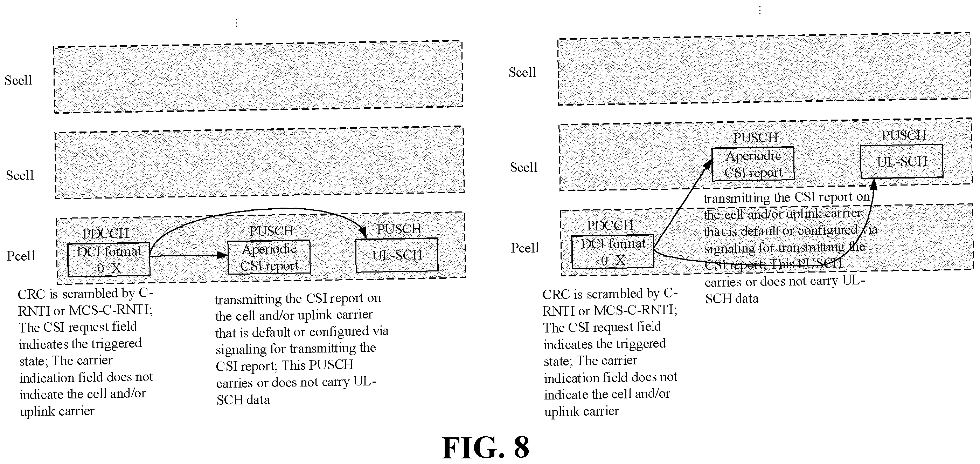

FIG. 8 is a schematic diagram of another example of aperiodic CSI reporting.

As shown in FIG. 8, in this example, the CRC of DCI format 0_X is scrambled by a C-RNTI or a MCS-C-RNTI, the CSI request field indicates a triggered state, the carrier indication field does not indicate a cell and/or uplink carrier, the left side of FIG. 8 shows a situation in which the indicated cell is a Pcell, the right side of FIG. 8 shows a situation in which the indicated cell is a Scell, and the terminal equipment may transmit a CSI report on a cell and/or uplink carrier that is default or configured by signaling. In this example, the PUSCH carries or does not carry UL-SCH data. In this example, unlike the example in FIG. 7, DCI format 0_X schedules two PUSCHs.

In some other implementations, the DCI format includes a field for indicating a cell and/or uplink carrier, and the terminal equipment ignores this field.

For example, DCI format 0_X includes a field for indicating a cell and/or an uplink carrier, such as a carrier indication field, which may indicate one or more cells and/or uplink carriers. The terminal equipment ignores this field when DCI format 0_X requests or triggers aperiodic CSI reporting. The terminal equipment transmits a CSI report on a cell and/or uplink carrier that is default or configured by signaling (such as RRC and/or MAC CE and/or DCI, etc.) and used for transmitting the CSI report.

In some further implementations, the DCI format includes a field for requesting or triggering CSI reporting, which is located before a field for indicating a cell and/or uplink carrier.

In the above implementations, in some examples, the DCI format does not include the field for indicating a cell and/or uplink carrier when requesting or triggering aperiodic CSI reporting.

For example, when DCI format 0_X does not request or trigger aperiodic CSI reporting, DCI format 0_X includes a field for indicating a cell and/or an uplink carrier, such as a carrier indication field, which may indicate one or more cells and/or uplink carriers. DCI format 0_X does not include the carrier indication field when DCI format 0_X requests or triggers aperiodic CSI reporting. The field for requesting or triggering CSI reporting (CSI request field) is before the field for indicating a cell and/or uplink carrier (carrier indication field). The terminal equipment transmits a CSI report on a cell and/or uplink carrier that is default or configured by signaling (such as RRC and/or MAC CE and/or DCI, etc.) and used for transmitting the CSI report.

In each of the above embodiments, the cell that is default and used for transmitting a CSI report may be a Pcell (primary cell) or a Pscell (primary secondary cell) or a PUCCH Scell (physical uplink control channel secondary cell), the present disclosure is not limited to this.

If the default cell only includes one uplink carrier, the default uplink carrier is an uplink carrier of the cell; if the default cell includes more than one uplink carrier, such as including NUL and SUL, on which uplink carrier of the cell that the CSI report is transmitted is indicated e.g. by a field for indicating an uplink carrier of the cell (such as UL-SUL indicator) included in DCI format 0_X, or, the CSI report is transmitted on the default uplink carrier of the cell, the default uplink carrier is e.g. NUL, SUL or a carrier configured with a PUCCH in more than one uplink carrier.

In the embodiments of the present disclosure, in some other embodiments, the DCI format schedules a PUSCH on one or more than one cell and/or uplink carrier; the terminal equipment transmits a CSI report on one of the one or more than one cell and/or uplink carrier.

For example, DCI format 0_X schedules a PUSCH on one or more cells and/or uplink carriers when triggering aperiodic CSI reporting. When scheduling a PUSCH on multiple cells and/or uplink carriers, the terminal equipment transmits a CSI report on a PUSCH of one of cells and/or uplink carrier. When scheduling a PUSCH on one cell and/or uplink carrier, the terminal equipment transmits the CSI report by using the same method as that in the preceding embodiments. Thereby, a current method may be reused to a certain extent, and since the network device may schedule UL-SCH data transmission of multiple cells via the same DCI while triggering CSI reporting, the scheduling flexibility and data transmission throughput can be increased.

In the above embodiments, the DCI format may include a field (or information field) for requesting or triggering CSI reporting, such as a CSI request field, a value of this field corresponds to a CSI aperiodic trigger state. When the value of this field corresponds to one CSI aperiodic trigger state, the DCI schedules a PUSCH on one or more cells and/or uplink carriers, and the terminal device transmits a corresponding CSI report on the PUSCH of one cell and/or uplink carrier.

A length of the field may be configured by a higher-layer parameter or may be determined by the terminal equipment according to the number of trigger states in a configured trigger state list. Here, the higher-layer parameter may be DCI format specific, or may be shared by the DCI format and other DCI format. Since the CSI request field has been described in the preceding embodiments, its contents are merged here and are not repeated here.

In some embodiments, the one cell and/or uplink carrier is a cell and/or uplink carrier that is default or configured by signaling and used for transmitting a CSI report. That is, the terminal equipment transmits a CSI report on a cell and/or uplink carrier that is default or configured by signaling and used for transmitting the CSI report.

In the above embodiments, the DCI format may further include a field for indicating a cell and/or uplink carrier, the cell and/or uplink carrier that is default or configured by signaling and used for transmitting a CSI report may be within a range of one or more cells and/or uplink carriers indicated in this field, or may not be within the range of one or more cells and/or uplink carriers indicated in this field.

For example, DCI format 0_X includes a field for indicating a cell and/or an uplink carrier, such as a carrier indication field, which may indicate one or more cells and/or uplink carriers. When DCI format 0_X requests or triggers aperiodic CSI reporting, if this field indicates multiple cells and/or uplink carriers, the terminal equipment transmits the CSI report on a PUSCH of one of cells and/or uplink carriers. The one of cells and/or uplink carriers is a cell and/or uplink carrier that is default or configured by signaling (such as RRC and/or MAC CE and/or DCI, etc.) and used for transmitting the CSI report.

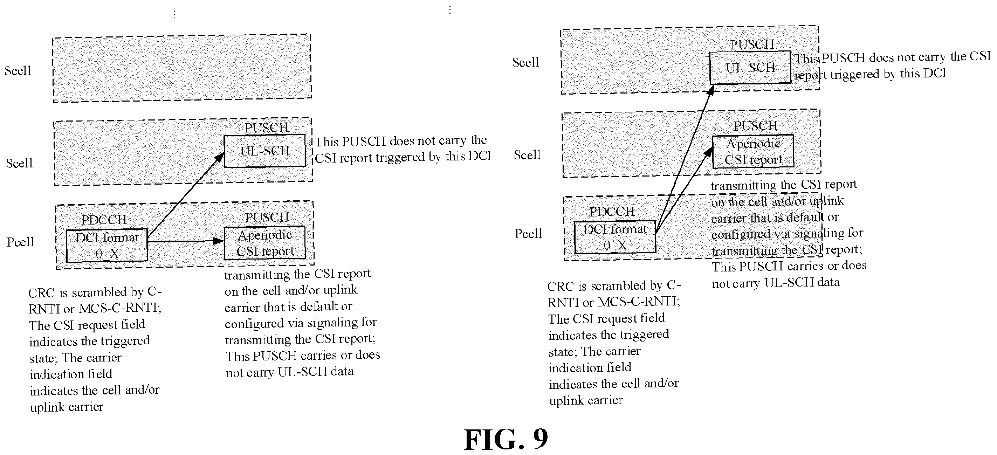

FIG. 9 is a schematic diagram of an example of aperiodic CSI reporting.

As shown in FIG. 9, in this example, the CRC of DCI format 0_X is scrambled by a C-RNTI or a MCS-C-RNTI, the CSI request field indicates a triggered state, the carrier indication field indicates a cell and/or uplink carrier, the left side of FIG. 9 shows a situation in which the indicated cell is a Pcell and a Scell, the right side of FIG. 9 shows a situation in which the indicated cells are two Scells, and the terminal equipment may transmit a CSI report on a cell and/or uplink carrier that is default or configured by signaling. In this example, the PUSCH carries or does not carry UL-SCH data. In addition, in this example, DCI format 0_X is associated with two PUSCHs, one of which carries a CSI report and the other one of which does not carry the CSI report.

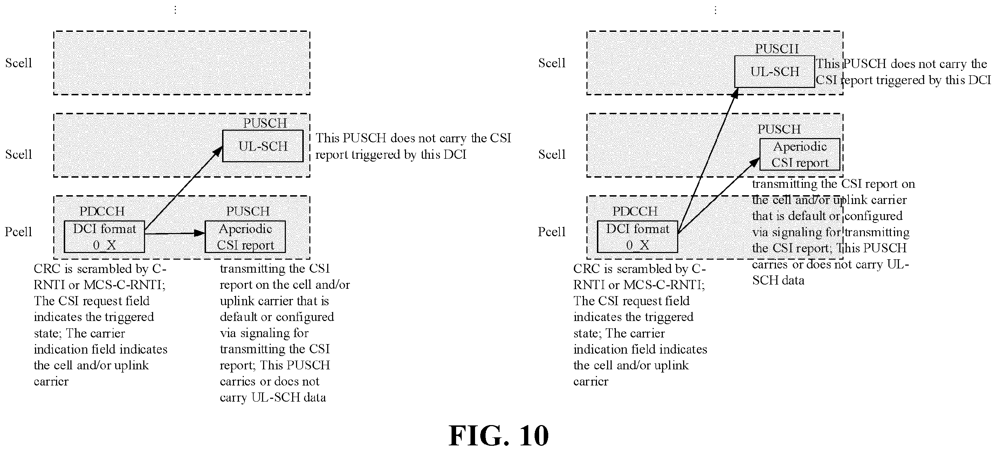

FIG. 10 is a schematic diagram of another example of aperiodic CSI reporting.

As shown in FIG. 10, in this example, the CRC of DCI format 0_X is scrambled by a C-RNTI or a MCS-C-RNTI, the CSI request field indicates a triggered state, the carrier indication field indicates a cell and/or uplink carrier, the left side of FIG. 10 shows a situation in which the indicated cell is a Pcell and a Scell, the right side of FIG. 10 shows a situation in which the indicated cells are two Scells, and the terminal equipment may transmit a CSI report on a cell and/or uplink carrier that is default or configured by signaling. In this example, the PUSCH carries or does not carry UL-SCH data. In addition, in this example, DCI format 0_X is associated with two PUSCHs, one of which carries a CSI report and the other one of which does not carry the CSI report. Unlike the example in FIG. 9, in the example in FIG. 10, two PUSCHs are staggered in a time domain.

In the examples in FIGS. 9 and 10, a situation in which there are multiple PUSCHs on one cell and/or uplink carrier is not shown, but the embodiments of the present disclosure do not exclude this situation. That is, FIGS. 9 and 10 only show that there is only one PUSCH on one cell and/or uplink carrier, and in the embodiments of the present disclosure, there may further be other PUSCH(s) on one cell and/or uplink carrier.

In the above embodiments, the cell that is default and used for transmitting a CSI report may be: a cell with a smallest serving cell identification number in scheduled cells; and/or, a cell where a first PUSCH satisfying a timing requirement for aperiodic CSI reporting in a time domain in a scheduled PUSCH is located; and/or, a cell with a smallest serving cell identification number in cells where a first PUSCH satisfying a timing requirement for aperiodic CSI reporting in a time domain in a scheduled PUSCH is located. The present disclosure is not limited to this, the cell that is default and used for transmitting a CSI report may further be other cell defined according to other rule.

In the above embodiments, the cell that is default and used for transmitting a CSI report may be a Pcell or a PScell or a PUCCH Scell, the present disclosure is not limited to this.

In some other embodiments, the terminal equipment transmits a CSI report on a default PUCCH.

In the above embodiments, the DCI format may further include a field for indicating a cell and/or an uplink carrier.

For example, DCI format 0_X includes a field for indicating a cell and/or an uplink carrier, such as a carrier indication field, which may indicate one or more cells and/or uplink carriers. When DCI format 0_X requests or triggers aperiodic CSI reporting, if this field indicates multiple cells and/or uplink carriers, the terminal equipment transmits the CSI report on one of the default PUSCHs.

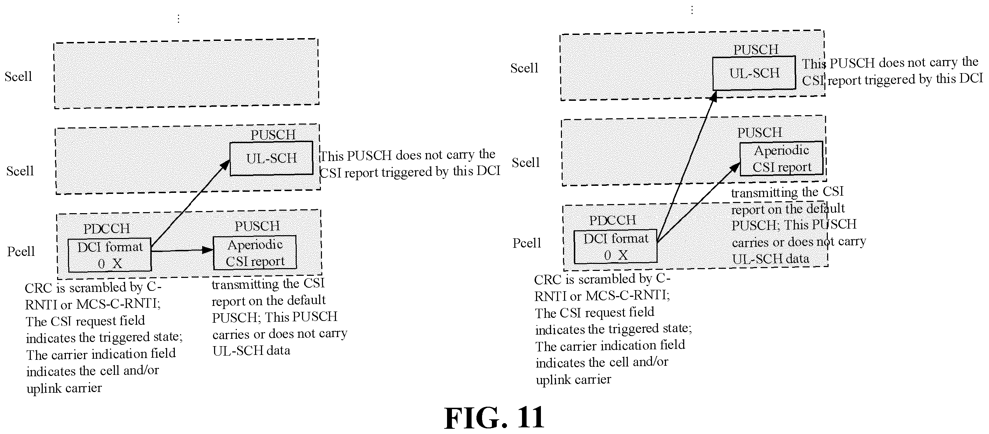

FIG. 11 is a schematic diagram of an example of aperiodic CSI reporting.

As shown in FIG. 11, in this example, the CRC of DCI format 0_X is scrambled by a C-RNTI or a MCS-C-RNTI, the CSI request field indicates a triggered state, the carrier indication field indicates a cell and/or uplink carrier, the left side of FIG. 11 shows a situation in which the indicated cell is a Pcell and a Scell, the right side of FIG. 11 shows a situation in which the indicated cells are two Scells, and the terminal equipment may transmit a CSI report on a default PUSCH. In this example, the PUSCH carries or does not carry UL-SCH data. In addition, in this example, DCI format 0_X is associated with two PUSCHs, one of which carries a CSI report and the other one of which does not carry the CSI report. Unlike the example in FIG. 9, in the example in FIG. 11, two PUSCHs are staggered in a time domain.

In the example in FIG. 11, a situation in which there are multiple PUSCHs on one cell and/or uplink carrier is not shown, but the embodiments of the present disclosure do not exclude this situation. That is, FIG. 11 only shows that there is only one PUSCH on one cell and/or uplink carrier, and in the embodiments of the present disclosure, there may further be other PUSCH(s) on one cell and/or uplink carrier.

In the above embodiments, the default PUSCH may be: a PUSCH with a smallest serving cell identification number in scheduled cells; and/or, a first PUSCH satisfying a timing requirement for aperiodic CSI reporting in a time domain in a scheduled PUSCH; and/or, a PUSCH of a cell with a smallest serving cell identification number in cells where a first PUSCH satisfying a timing requirement for aperiodic CSI reporting in a time domain in a scheduled PUSCH is located. The present disclosure is not limited to this, the default PUSCH may further be other PUSCH defined according to other rule.

In the above embodiments, the cell where the default PUSCH is located may be a Pcell or a PScell or a PUCCH Scell, the present disclosure is not limited to this.

In the embodiments of the present disclosure, in some further embodiments, the DCI format schedules a PUSCH on more than one cell and/or uplink carrier; the terminal equipment transmits a CSI report on one or more than one of the more than one cell and/or uplink carrier.

For example, DCI format 0_X schedules a PUSCH on one or more cells and/or uplink carriers when triggering aperiodic CSI reporting. When scheduling a PUSCH on multiple cells and/or uplink carriers, the terminal equipment transmits a CSI report on a PUSCH of one or some or all of cells and/or uplink carrier. When scheduling a PUSCH on one cell and/or uplink carrier, the terminal equipment transmits the CSI report by using the same method as that in the preceding embodiments. Thereby, since the network device triggers the terminal equipment to transmit the CSI report on one or more or all of the cells and/or uplink carriers via the same DCI, and may schedule UL-SCH data transmission of multiple cells via the same DCI while triggering CSI reporting, and in a case where a bandwidth of each carrier is small, the CSI feedback efficiency can be improved, at the same time, the scheduling flexibility and data transmission throughput can be increased.

In the above embodiments, the DCI format may include a field for indicating a cell and/or uplink carrier, this field indicates the more than one cell and/or uplink carrier.

For example, DCI format 0_X includes a field for indicating a cell and/or an uplink carrier, such as a carrier indication field, which may indicate one or more cells and/or uplink carriers. In the case of indicating that multiple cells and/or uplink carriers are scheduled, the terminal equipment transmits a CSI report on a PUSCH of more than one cell and/or uplink carrier.

In the above embodiments, the contents of the CSI report on different PUSCHs may be the same or may be different.

In some implementations, the DCI format includes a field for requesting or triggering CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

For example, DCI format 0_X includes a field for requesting or triggering CSI, such as a CSI request field, CSI reports on different PUSCHs are the same (repeated), and/or, different PUSCHs are respectively used to carry different CSI reports corresponding to trigger states indicated in this field (one trigger state may correspond to one or more CSI reports), and/or, different PUSCHs are respectively used to carry different parts of the CSI report (for example, carry Part 1 and Part 2 respectively).

In some implementations, the DCI format includes multiple fields for requesting or triggering CSI reporting, different PUSCHs are respectively used to carry different CSI reports corresponding to trigger states associated with fields for requesting or triggering CSI reporting.

For example, DCI format 0_X includes multiple fields for requesting or triggering CSI, such as a CSI request field, different fields correspond to different cells and/or uplink carriers respectively, that is, different PUSCHs are respectively used to carry different CSI reports corresponding to trigger states indicated in fields for requesting or triggering CSI.

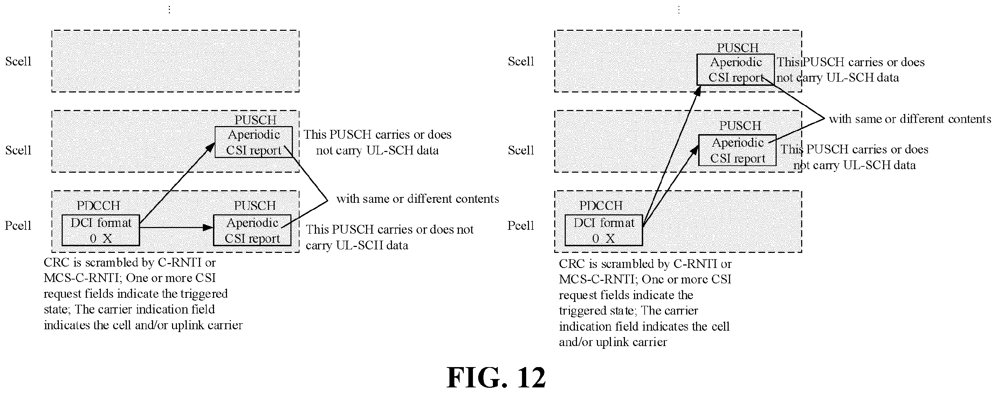

FIG. 12 is a schematic diagram of an example of aperiodic CSI reporting.

As shown in FIG. 12, in this example, the CRC of DCI format 0_X is scrambled by a C-RNTI or a MCS-C-RNTI, one or more CSI request fields indicate a triggered state, the carrier indication field indicates a cell and/or uplink carrier, the left side of FIG. 12 shows a situation in which the indicated cell is a Pcell and a Scell, the right side of FIG. 12 shows a situation in which the indicated cells are two Scells, and the terminal equipment may transmit a CSI report on two cells and/or uplink carriers, and the contents of the CSI reports on two cells and/or uplink carriers may be the same or may be different. In this example, the PUSCH carries or does not carry UL-SCH data. In this example, DCI format 0_X schedules two PUSCHs.

In the embodiments of the present disclosure, CRC of the DCI format may be scrambled by a C-RNTI or by a MCS-C-RNTI, the present disclosure is not limited to this.

In the embodiments of the present disclosure, the terminal equipment may further receive configuration information for configuring the terminal equipment to monitor the DCI format in a UE-specific search space. The present disclosure does not restrict a specific configuration mode. For relevant contents about the configuration information, related technologies may be referred to.

In the embodiments of the present disclosure, the terminal equipment may further receive configuration information for configuring whether the DCI format supports triggering CSI reporting or whether the DCI format is used to trigger CSI reporting. The present disclosure does not restrict a specific configuration mode. For relevant contents about the configuration information, related technologies may be referred to.

In the embodiments of the present disclosure, the terminal equipment may further receive configuration information for configuring a cell and/or uplink carrier that may be scheduled by the DCI format. The present disclosure does not restrict a specific configuration mode. For relevant contents about the configuration information, related technologies may be referred to.

In the embodiments of the present disclosure, the more than one uplink carrier may belong to different cells respectively, or at least two of the more than one uplink carrier belong to different cells, the present disclosure is not limited to this.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, aperiodic CSI reporting is realized in a case where the DCI format can schedule PUSCHs of multiple cells.

Embodiments of a second aspect

Embodiments of the present disclosure provide a method for receiving a CSI report, applied to a network device side, being processing on a network device side corresponding to the method in the embodiments of the first aspect, the same contents as the embodiments of the first aspect are not repeated.

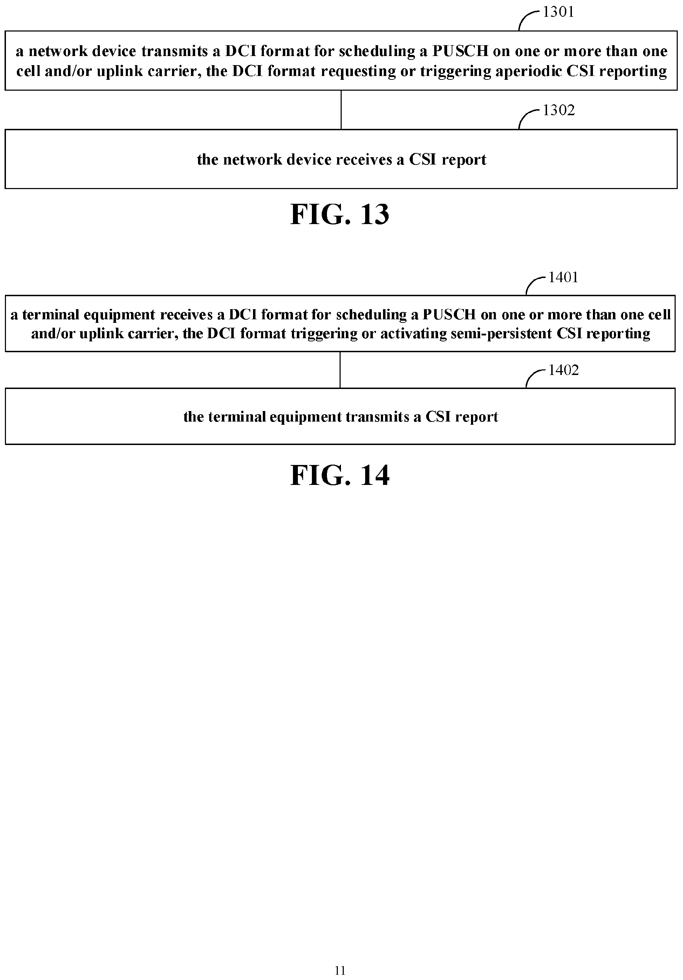

FIG. 13 is a schematic diagram of a method for receiving a CSI report in the embodiments of the present disclosure, as shown in FIG. 13, the method includes:

1301, a network device transmits a DCI format for scheduling a PUSCH on one or more than one cell and/or uplink carrier, the DCI format requesting or triggering aperiodic CSI reporting; and

1302, the network device receives a CSI report.

It should be noted that the above FIG. 13 is only schematic description of the embodiments of the present disclosure, but the present disclosure is not limited to this. For example, an execution order of each operation may be adjusted appropriately, moreover some other operations may be increased or operations therein may be reduced. Persons skilled in the art may make appropriate modifications according to the above contents, not limited to the records in the above FIG. 13.

According to the embodiments of the present disclosure, aperiodic CSI reporting is realized in a case where the DCI format can schedule PUSCHs of multiple cells.

In some embodiments, the DCI format schedules a PUSCH on one cell and/or uplink carrier, and the network device receives the CSI report on the one cell and/or uplink carrier.

In some embodiments, in a case where the DCI format requests or triggers aperiodic CSI reporting, the DCI format only schedules a PUSCH on one cell and/or uplink carrier.

In some embodiments, the DCI format includes a field for indicating a cell and/or an uplink carrier, the field indicating one cell and/or uplink carrier; the network device receives a CSI report on the cell and/or uplink carrier indicated in this field.

In some embodiments, the network device receives a CSI report on a cell and/or uplink carrier that is default or configured by signaling and used for receiving the CSI report.

In the above embodiments, in some implementations, the DCI format includes a field for indicating a cell and/or uplink carrier, the field does not indicate a cell and/or uplink carrier.

In the above embodiments, in some other implementations, the DCI format includes a field for indicating a cell and/or uplink carrier, and the terminal equipment ignores this field.

In some embodiments, the DCI format includes a field for requesting or triggering CSI reporting, which is located before a field for indicating a cell and/or uplink carrier.

In some embodiments, the DCI format does not include a field for indicating a cell and/or uplink carrier when requesting or triggering aperiodic CSI reporting.

In some embodiments, the cell that is default and used for receiving a CSI report is a Pcell or a PScell or a PUCCH Scell.

In some embodiments, the DCI format schedules a PUSCH on one or more than one cell and/or uplink carrier; the network device receives the CSI report on one of the one or more than one cell and/or uplink carrier.

In each of the above embodiments, the DCI format may include a field for requesting or triggering CSI reporting, a value of this field corresponds to a CSI aperiodic trigger state.

In the above embodiments, a length of the field may be configured by a higher-layer parameter or may be determined by the terminal equipment according to the number of trigger states in a configured trigger state list. The higher-layer parameter may be DCI format specific, or may be shared by the DCI format and other DCI format.

In some embodiments, the one cell and/or uplink carrier is a cell and/or uplink carrier that is default or configured by signaling and used for transmitting a CSI report.

In the above embodiments, the cell that is default and used for transmitting a CSI report may be at least one of the following:

a cell with a smallest serving cell identification number in scheduled cells;
a cell where a first PUSCH satisfying a timing requirement for aperiodic CSI reporting in a time domain in a scheduled PUSCH is located; and
a cell with a smallest serving cell identification number in cells where a first PUSCH satisfying a timing requirement for aperiodic CSI reporting in a time domain in a scheduled PUSCH is located.

In the above embodiments, the cell that is default and used for transmitting a CSI report may be a Pcell or a PScell or a PUCCH Scell.

In some other embodiments, the network device receives the CSI report on a default PUSCH.

In the above embodiments, the default PUSCH may be at least one of the following:

a PUSCH of a cell with a smallest serving cell identification number in scheduled cells;
a first PUSCH satisfying a timing requirement for aperiodic CSI reporting in a time domain in a scheduled PUSCH; and
a PUSCH of a cell with a smallest serving cell identification number in cells where a first PUSCH satisfying a timing requirement for aperiodic CSI reporting in a time domain in a scheduled PUSCH is located.

In the above embodiments, the cell where the default PUSCH is located may be a Pcell or a PScell or a PUCCH Scell.

In some embodiments, the DCI format includes a field for indicating a cell and/or an uplink carrier.

In the above embodiments, the cell and/or uplink carrier that is default or configured by signaling and used for transmitting a CSI report is within a range of one or more cells and/or uplink carriers indicated in the field, or is not within the range of one or more cells and/or uplink carriers indicated in the field.

In some embodiments, the DCI format schedules a PUSCH on more than one cell and/or uplink carrier; the network device receives a CSI report on one or more than one of the more than one cell and/or uplink carrier.

In the above embodiments, the DCI format may include a field for indicating a cell and/or uplink carrier, this field indicates the more than one cell and/or uplink carrier.

In the above embodiments, the contents of the CSI report on different PUSCHs may be the same or different.

In the above embodiments, the DCI format may include a field for requesting or triggering CSI reporting, CSI reports on different PUSCHs are the same or different, and/or, different PUSCHs are respectively used to carry different CSI reports corresponding to trigger states associated with the field, and/or, different PUSCHs are respectively used to carry different parts of the CSI report.

In the above embodiments, the DCI format may include multiple fields for requesting or triggering CSI reporting, different PUSCHs are respectively used to carry different CSI reports corresponding to trigger states associated with fields for requesting or triggering CSI reporting.

In each of the above embodiments, CRC of the DCI format may be scrambled by a C-RNTI or by a MCS-C-RNTI.

In each of the above embodiments, the network device may further transmit configuration information for configuring a terminal equipment to monitor the DCI format in a UE-specific search space.

In each of the above embodiments, the network device may further transmit configuration information for configuring whether the DCI format supports triggering CSI reporting or whether the DCI format is used to trigger CSI reporting.

In each of the above embodiments, the network device may further transmit configuration information for configuring a cell and/or uplink carrier that may be scheduled by the DCI format.

In each of the above embodiments, the more than one uplink carrier may belong to different cells respectively, or at least two of the more than one uplink carrier may belong to different cells.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, aperiodic CSI reporting is realized in a case where the DCI format can schedule PUSCHs of multiple cells.

Embodiments of a third aspect

The embodiments of the present disclosure provide a method for reporting semi-persistent CSI, applied in a terminal equipment side.

FIG. 14 is a schematic diagram of a method for reporting semi-persistent CSI in the embodiments of the present disclosure, as shown in FIG. 14, the method includes:

1401, a terminal equipment receives a DCI format for scheduling a PUSCH on one or more than one cell and/or uplink carrier, the DCI format triggering or activating semi-persistent CSI reporting; and
1402, the terminal equipment transmits a CSI report.

It should be noted that the above FIG. 14 is only schematic description of the embodiments of the present disclosure, by taking the terminal equipment as an example, but the present disclosure is not limited to this. For example, an execution order of each operation may be adjusted appropriately, moreover some other operations may be increased or operations therein may be reduced. In addition, objects of the above operations may further be adjusted. Persons skilled in the art may make appropriate modifications according to the above contents, not limited to the records in the above FIG. 14.

According to the embodiments of the present disclosure, semi-persistent CSI reporting is realized in a case where the DCI format can schedule PUSCHs of multiple cells.

For SP CSI reporting on a PUSCH, a reporting period and a slot offset, etc. are configured by a base station via higher-layer signaling or parameter, and triggered by a DCI format scrambled by an SP-CSI-RNTI.

SP CSI reporting based on DCI format 0_X includes the following steps:

A base station configures one or more trigger states (a trigger state list) via higher-layer signaling or parameter (such as CSI-SemiPersistentOnPUSCH-TriggerStateList). Each trigger state corresponds to/is associated with one or more CSI report configurations;
A UE monitors DCI format 0_X scrambled by an SP-CSI-RNTI and determines which trigger state (SP-CSI trigger state) is triggered or activated according to a value of a CSI request field therein. A value of the CSI request field equals to 0, which corresponds to the first trigger state in the above list, the value of the CSI request field equals to 1, which corresponds to the second trigger state in the above list, and so on.

In addition, possible CSI-RS configuration of the SP CSI reporting includes a periodic CSI-RS, and a semi-persistent CSI-RS, etc. A timing relationship of the PUSCH-based SP CSI reporting is shown in FIG. 3 in which a reference signal for measurement is omitted.

In the embodiments of the present disclosure, the higher-layer parameter for configuring a trigger state list is DCI format 0_X specific or shared by DCI format 0_X and another DCI format. "Specific" means only for DCI format 0_X. "Shared" means that in a case where monitoring another DCI format for triggering SP-CSI reporting is configured, for the another DCI format, the higher-layer parameter aore for DCI format 0_X and the another DCI format simultaneously or not simultaneously. "Simultaneously" means that in a case where the monitoring DCI format 0_X (and DCI format 0_X is used to trigger SP-CSI reporting) and another DCI format for triggering SP-CSI reporting are configured, the higher-layer parameter is for both DCI format 0_X and the another DCI format. "Not simultaneously" means that the two DCI formats cannot be configured to both need to be monitored, or cannot be configured to both need to be monitored and both are used to trigger SP-CSI reporting, thereby the higher-layer parameter is only for DCI format 0_X or the another DCI format in a specific DCI format configuration situation, and will not be for both DCI format 0_X and the another DCI format simultaneously.

In this embodiment, the trigger state refers to a semi-persistent CSI trigger state, and the CSI reporting refers to semi-persistent CSI reporting.

In the embodiments of the present disclosure, in some embodiments, the DCI format schedules a PUSCH on one cell and/or uplink carrier, and the terminal equipment transmits the CSI report on the one cell and/or uplink carrier.

In some other embodiments, in a case where the DCI format triggers or activates semi-persistent CSI reporting, the DCI format only schedules a PUSCH on one cell and/or uplink carrier. Thereby, the terminal equipment may transmit the CSI reports on this one cell and/or uplink carrier. As a result, an existing method may be reused to the maximum extent, complexity is reduced, and the equipment upgrade cost is reduced.

For example, the DCI format includes a field (or information field) for triggering or activating CSI reporting, such as a CSI request field, a value of this field corresponds to a CSI trigger state. When the value of this field corresponds to one CSI trigger state, the DCI format only schedules a PUSCH on one cell and/or uplink carrier, and the terminal device transmits a corresponding CSI report on the PUSCH of the one cell and/or uplink carrier.

In the above embodiments, a length of the CSI request field is $N_{TS}$ (i.e., including $N_{TS}$ bits) and is configured by the network device via a higher-layer parameter (e.g. *reportTriggerSize*), up to $2^{N_{TS}}$-1 trigger states may be indicated. When the number of CSI trigger states configured by the network device via the higher-layer signaling or parameter does not exceed $2^{N_{TS}}$-1, the CSI request field directly indicates which state is requested. When the number of CSI trigger states configured by the network device via the higher-layer signaling or parameter exceeds $2^{N_{TS}}$-1, the network device further selects no more than 2^(N_TS )-1 CSI trigger states via a MAC CE (for example, an CSI trigger state subselection MAC CE), then the CSI request field indicates which state is requested. There is a delay between the terminal equipment receives the MAC CE command and the command is taken effect. If HARQ-ACK corresponding to a PDSCH carrying the MAC CE is transmitted on slot *n,* an effective slot for the CSI trigger state selection is $n + 3N_{slot}^{subframe,\mu} + 1$ .

In the above embodiments, in some implementations, a length of the CSI request field is configured by a higher-layer parameter that may be DCI format 0_X specific or shared by DCI format 0_X and another DCI format. "Specific" means only for DCI format 0_X. "Shared" means that in a case where monitoring another DCI format for triggering CSI reporting is configured, for the another DCI format, the higher-layer parameter is for DCI format 0_X and the another DCI format simultaneously or not simultaneously. "Simultaneously" means that in a case where the monitoring DCI format 0_X (and DCI format 0_X is used to trigger CSI reporting) and another DCI format for triggering CSI reporting is configured, the higher-layer parameter is for both DCI format 0_X and the another DCI format. "Not simultaneously" means that the two DCI formats cannot be configured to both need to be monitored, or cannot be configured to both need to be monitored and both are used to trigger CSI reporting, thereby the higher-layer parameter is only for DCI format 0_X or the another DCI format in a specific DCI format configuration situation, and will not be for both DCI format 0_X and the another DCI format simultaneously.

In the above embodiments, in some other implementations, the length of the CSI request field is not determined by a higher-layer parameter, but is determined by the terminal equipment according to the number of trigger states in a corresponding configured trigger state list.

In some further embodiments, the DCI format includes a field for indicating a cell and/or an uplink carrier, the field indicating one cell and/or uplink carrier; the terminal equipment transmits a CSI report on the cell and/or uplink carrier indicated in this field.

For example, DCI format 0_X includes a field for indicating a cell and/or an uplink carrier, such as a carrier indication field, which may indicate one or more cells and/or uplink carriers. This field only indicates one cell and/or uplink carrier when DCI format 0_X triggers or activates semi-persistent CSI reporting.

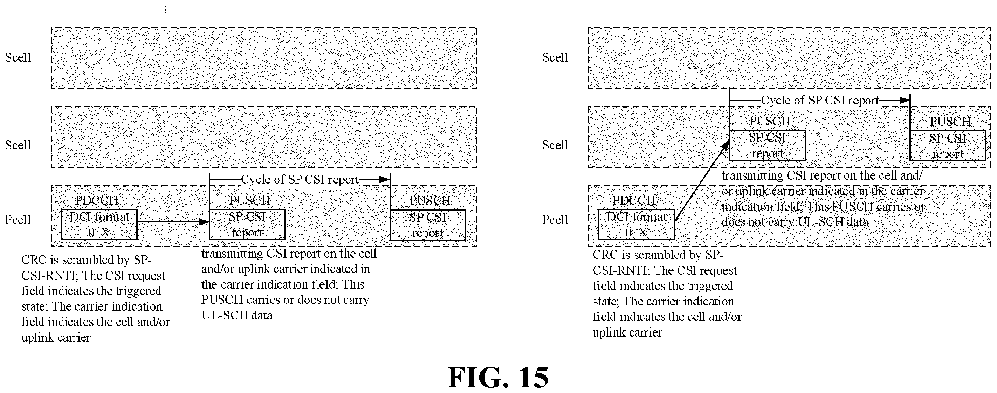

FIG. 15 is a schematic diagram of an example of semi-persistent CSI reporting.

As shown in FIG. 15, in this example, the CRC of DCI format 0_X is scrambled by an SP-CSI-RNTI, the CSI request field indicates a triggered state, the carrier indication field indicates a cell and/or uplink carrier, the left side of FIG. 15 shows a situation in which the indicated cell is a Pcell, the right side of FIG. 15 shows a situation in which the indicated cell is a Scell, and the terminal equipment may transmit a CSI report on a cell and/or uplink carrier indicated in the carrier indication field. As shown in FIG. 15, the CSI report is semi-persistent. In this example, the PUSCH carries or does not carry UL-SCH data.

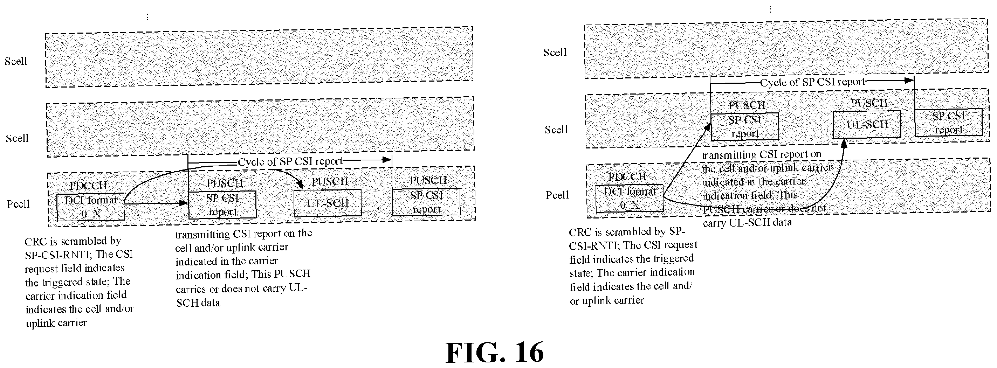

FIG. 16 is a schematic diagram of another example of semi-persistent CSI reporting.

As shown in FIG. 16, in this example, the CRC of DCI format 0_X is scrambled by an SP-CSI-RNTI, the CSI request field indicates a triggered state, the carrier indication field indicates a cell and/or uplink carrier, the left side of FIG. 16 shows a situation in which the indicated cell is a Pcell, the right side of FIG. 16 shows a situation in which the indicated cell is a Scell, and the terminal equipment may transmit a CSI report on a cell and/or uplink carrier indicated in the carrier indication field. As shown in FIG. 16, the CSI report is semi-persistent. In this example, the PUSCH carries or does not carry UL-SCH data. In this example, unlike the example in FIG. 15, DCI format 0_X schedules two PUSCHs.

In some other embodiments, the terminal equipment transmits a CSI report on a cell and/or uplink carrier that is default or configured by signaling and used for transmitting the CSI report.

In the above embodiments, in some implementations, the DCI format includes a field for indicating a cell and/or uplink carrier, the field does not indicate a cell and/or uplink carrier.

For example, DCI format 0_X includes a field for indicating a scheduled cell and/or an uplink carrier, such as a carrier indication field, which may indicate one or more cells and/or uplink carriers. This field does not indicate a cell and/or uplink carrier when DCI format 0_X triggers or activates semi-persistent CSI reporting. For example, a bit of this field is set to be a specific value that does not correspond to any cell and/or uplink carrier. The terminal equipment transmits a CSI report on a cell and/or uplink carrier that is default or configured by signaling (such as RRC and/or MAC CE and/or DCI, etc.) and used for transmitting the CSI report.

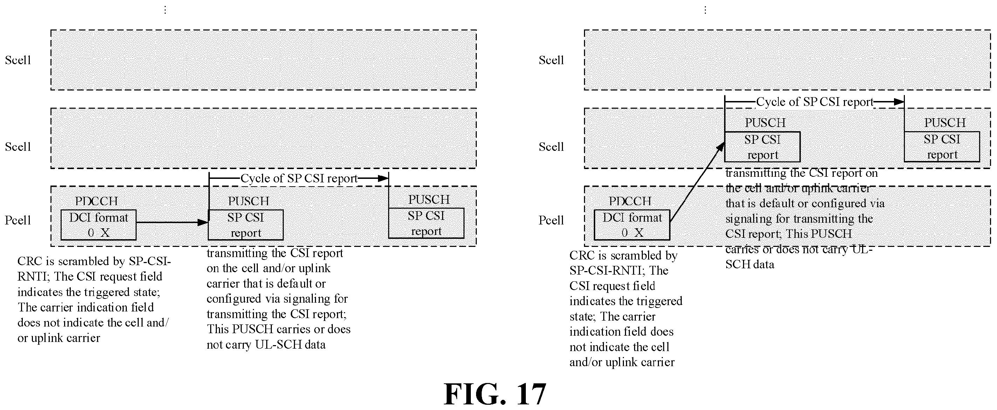

FIG. 17 is a schematic diagram of an example of semi-persistent CSI reporting.

As shown in FIG. 17, in this example, the CRC of DCI format 0_X is scrambled by an SP-CSI-RNTI, the CSI request field indicates a triggered state, the carrier indication field does not indicate a cell and/or uplink carrier, the left side of FIG. 17 shows a situation in which the indicated cell is a Pcell, the right side of FIG. 17 shows a situation in which the indicated cell is a Scell, and the terminal equipment may transmit a CSI report on a cell and/or uplink carrier that is default or configured by signaling. As shown in FIG. 17, the CSI report is semi-persistent. In this example, the PUSCH carries or does not carry UL-SCH data.

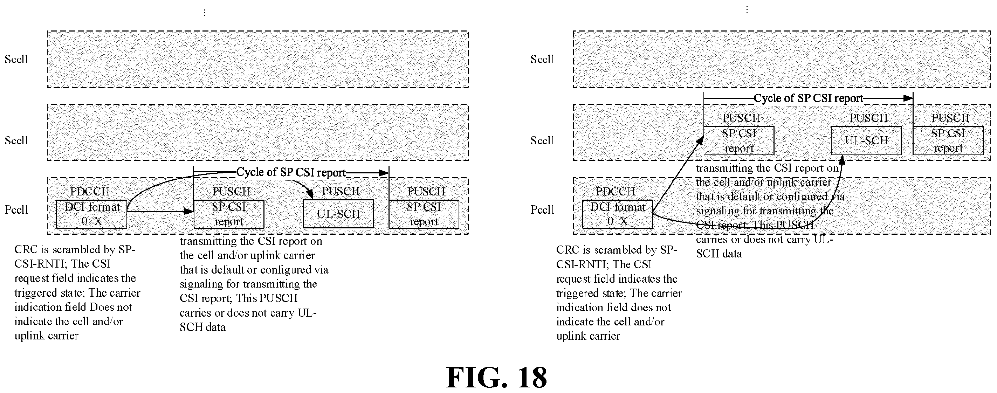

FIG. 18 is a schematic diagram of another example of semi-persistent CSI reporting.

As shown in FIG. 18, in this example, the CRC of DCI format 0_X is scrambled by an SP-CSI-RNTI, the CSI request field indicates a triggered state, the carrier indication field does not indicate a cell and/or uplink carrier, the left side of FIG. 18 shows a situation in which the indicated cell is a Pcell, the right side of FIG. 18 shows a situation in which the indicated cell is a Scell, and the terminal equipment may transmit a CSI report on a cell and/or uplink carrier that is default or configured by signaling. As shown in FIG. 18, the CSI report is semi-persistent. In this example, the PUSCH carries or does not carry UL-SCH data. In this example, unlike the example in FIG. 17, DCI format 0_X schedules two PUSCHs.

In some other implementations, the DCI format includes a field for indicating a cell and/or uplink carrier, and the terminal equipment ignores this field.

For example, DCI format 0_X includes a field for indicating a cell and/or an uplink carrier, such as a carrier indication field, which may indicate one or more cells and/or uplink carriers. The terminal equipment ignores this field when DCI format 0_X triggers or activates semi-persistent CSI reporting. The terminal equipment transmits a CSI report on a cell and/or uplink carrier that is default or configured by signaling (such as RRC and/or MAC CE and/or DCI, etc.) and used for transmitting the CSI report.

In some further implementations, the DCI format includes a field for triggering or activating CSI reporting, which is located before a field for indicating a cell and/or uplink carrier.

In the above implementations, in some examples, the DCI format does not include the field for indicating a cell and/or uplink carrier when triggering or activating semi-persistent CSI reporting.

For example, when DCI format 0_X does not trigger or activate semi-persistent CSI reporting, DCI format 0_X includes a field for indicating a cell and/or an uplink carrier, such as a carrier indication field, which may indicate one or more cells and/or uplink carriers. DCI format 0_X does not include the carrier indication field when DCI format 0_X triggers or activates semi-persistent CSI reporting. The field for triggering or activating CSI reporting (CSI request field) is before the field for indicating a cell and/or uplink carrier (carrier indication field). The terminal equipment transmits a CSI report on a cell and/or uplink carrier that is default or configured by signaling (such as RRC and/or MAC CE and/or DCI, etc.) and used for transmitting the CSI report.

In each of the above embodiments, the cell that is default and used for transmitting a CSI report may be a Pcell or a Pscell or a PUCCH Scell, the present disclosure is not limited to this.

If the default cell only includes one uplink carrier, the default uplink carrier is an uplink carrier of the cell; if the default cell includes more than one uplink carrier, such as including NUL and SUL, the default uplink carrier is e.g. NUL, SUL or a carrier configured with a PUCCH in more than one uplink carrier.

In the embodiments of the present disclosure, in some other embodiments, the DCI format schedules a PUSCH on one or more than one cell and/or uplink carrier; the terminal equipment transmits a CSI report on one of the one or more than one cell and/or uplink carrier.

For example, DCI format 0_X schedules a PUSCH on one or more cells and/or uplink carriers when triggering or activating semi-persistent CSI reporting. When scheduling a PUSCH on multiple cells and/or uplink carriers, the terminal equipment transmits a CSI report on a PUSCH of one of cells and/or uplink carrier. When scheduling a PUSCH on one cell and/or uplink carrier, the terminal equipment transmits the CSI report by using the same method as that in the preceding embodiments. Thereby, a current method may be reused to a certain extent, and since the network device may schedule UL-SCH data transmission of multiple cells via the same DCI while triggering or activating semi-persistent CSI reporting, the scheduling flexibility and data transmission throughput can be increased.

In the above embodiments, the DCI format may include a field (or information field) for triggering or activating CSI reporting, such as a CSI request field, a value of this field corresponds to a CSI trigger state. When the value of this field corresponds to one CSI trigger state, the DCI schedules a PUSCH on one or more cells and/or uplink carriers, and the terminal device transmits a corresponding CSI report on the PUSCH of one cell and/or uplink carrier.

A length of the field may be configured by a higher-layer parameter or may be determined by the terminal equipment according to the number of trigger states in a configured trigger state list. Here, the higher-layer parameter may be DCI format specific, or may be shared by the DCI format and other DCI format. Since the CSI request field has been described in the preceding embodiments, its contents are merged here and are not repeated here.

In some embodiments, the one cell and/or uplink carrier is a cell and/or uplink carrier that is default or configured by signaling and used for transmitting a CSI report. That is, the terminal equipment transmits a CSI report on a cell and/or uplink carrier that is default or configured by signaling and used for transmitting the CSI report.

In the above embodiments, the DCI format may further include a field for indicating a cell and/or uplink carrier, the cell and/or uplink carrier that is default or configured by signaling and used for transmitting a CSI report may be within a range of one or more cells and/or uplink carriers indicated in this field, or may not be within the range of one or more cells and/or uplink carriers indicated in this field.

For example, DCI format 0_X includes a field for indicating a cell and/or an uplink carrier, such as a carrier indication field, which may indicate one or more cells and/or uplink carriers. When DCI format 0_X triggers or activates semi-persistent CSI reporting, if this field indicates multiple cells and/or uplink carriers, the terminal equipment transmits the CSI report on a PUSCH of one of cells and/or uplink carriers. The one of cells and/or uplink carriers is a cell and/or uplink carrier that is default or configured by signaling (such as RRC and/or MAC CE and/or DCI, etc.) and used for transmitting the CSI report.

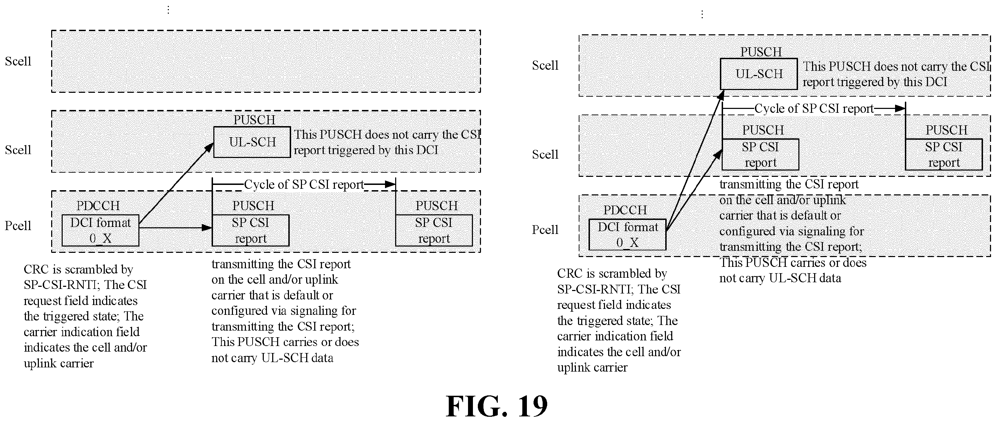

FIG. 19 is a schematic diagram of an example of semi-persistent CSI reporting.

As shown in FIG. 19, in this example, the CRC of DCI format 0_X is scrambled by an SP-CSI-RNTI, the CSI request field indicates a triggered state, the carrier indication field indicates a cell and/or uplink carrier, the left side of FIG. 19 shows a situation in which the indicated cell is a Pcell and a Scell, the right side of FIG. 19 shows a situation in which the indicated cells are two Scells, and the terminal equipment may transmit a CSI report on a cell and/or uplink carrier that is default or configured by signaling. As shown in FIG. 19, the CSI report is semi-persistent. In this example, the PUSCH carries or does not carry UL-SCH data. In addition, in this example, DCI format 0_X is associated with two PUSCHs, one of which carries a CSI report and the other one of which does not carry the CSI report.

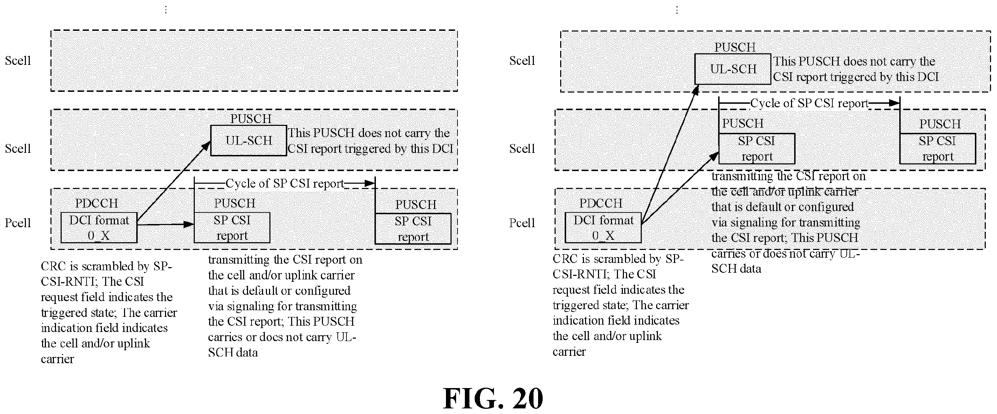

FIG. 20 is a schematic diagram of another example of semi-persistent CSI reporting.

As shown in FIG. 20, in this example, the CRC of DCI format 0_X is scrambled by an SP-CSI-RNTI, the CSI request field indicates a triggered state, the carrier indication field indicates a cell and/or uplink carrier, the left side of FIG. 20 shows a situation in which the indicated cell is a Pcell and a Scell, the right side of FIG. 20 shows a situation in which the indicated cells are two Scells, and the terminal equipment may transmit a CSI report on a cell and/or uplink carrier that is default or configured by signaling. As shown in FIG. 20, the CSI report is semi-persistent. In this example, the PUSCH carries or does not carry UL-SCH data. In addition, in this example, DCI format 0_X is associated with two PUSCHs, one of which carries a CSI report and the other one of which does not carry the CSI report. Unlike the example in FIG. 19, in the example in FIG. 20, two PUSCHs are staggered in a time domain.

In the examples in FIGS. 19 and 20, a situation in which there are multiple PUSCHs on one cell and/or uplink carrier is not shown, but the embodiments of the present disclosure do not exclude this situation. That is, FIGS. 19 and 20 only show that there is only one PUSCH on one cell and/or uplink carrier, and in the embodiments of the present disclosure, there may further be other PUSCH(s) on one cell and/or uplink carrier.

In the above embodiments, the cell that is default and used for transmitting a CSI report may be: a cell with a smallest serving cell identification number in scheduled cells; and/or, a cell where a first PUSCH satisfying a timing requirement for semi-persistent CSI reporting in a time domain in a scheduled PUSCH is located; and/or, a cell with a smallest serving cell identification number in cells where a first PUSCH satisfying a timing requirement for semi-persistent CSI reporting in a time domain in a scheduled PUSCH is located. The present disclosure is not limited to this, the cell that is default and used for transmitting a CSI report may further be other cell defined according to other rule.

In the above embodiments, the cell that is default and used for transmitting a CSI report may be a Pcell or a PScell or a PUCCH Scell, the present disclosure is not limited to this.

In some other embodiments, the terminal equipment transmits a CSI report on a default PUCCH.

In the above embodiments, the DCI format may further include a field for indicating a cell and/or an uplink carrier.

For example, DCI format 0_X includes a field for indicating a cell and/or an uplink carrier, such as a carrier indication field, which may indicate one or more cells and/or uplink carriers. When DCI format 0_X triggers or activates semi-persistent CSI reporting, if this field indicates multiple cells and/or uplink carriers, the terminal equipment transmits the CSI report on one of the default PUSCHs.

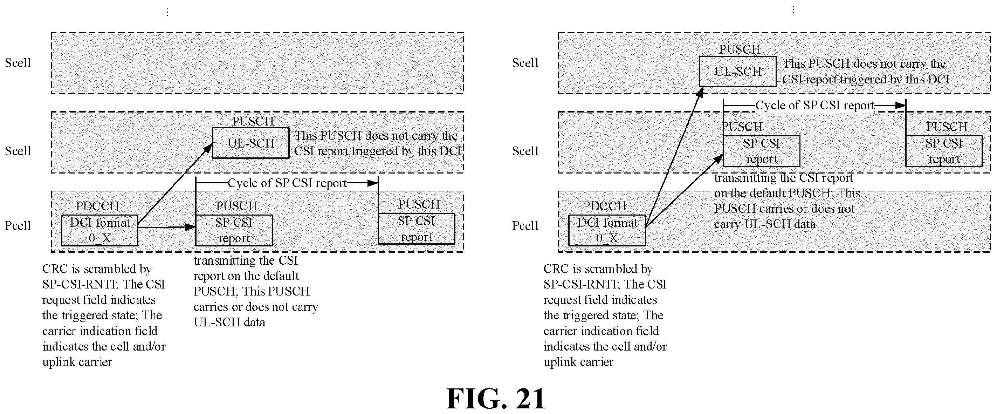

FIG. 21 is a schematic diagram of an example of semi-persistent CSI reporting.

As shown in FIG. 21, in this example, the CRC of DCI format 0_X is scrambled by a an SP-CSI-RNTI, the CSI request field indicates a triggered state, the carrier indication field indicates a cell and/or uplink carrier, the left side of FIG. 21 shows a situation in which the indicated cell is a Pcell and a Scell, the right side of FIG. 21 shows a situation in which the indicated cells are two Scells, and the terminal equipment may transmit a CSI report on a default PUSCH. As shown in FIG. 21, the CSI report is semi-persistent. In this example, the PUSCH carries or does not carry UL-SCH data. In addition, in this example, DCI format 0_X is associated with two PUSCHs, one of which carries a CSI report and the other one of which does not carry the CSI report. Unlike the example in FIG. 19, in the example in FIG. 21, two PUSCHs are staggered in a time domain.

In the example in FIG. 21, a situation in which there are multiple PUSCHs on one cell and/or uplink carrier is not shown, but the embodiments of the present disclosure do not exclude this situation. That is, FIG. 21 only shows that there is only one PUSCH on one cell and/or uplink carrier, and in the embodiments of the present disclosure, there may further be other PUSCH(s) on one cell and/or uplink carrier.

In the above embodiments, the default PUSCH may be: a PUSCH with a smallest serving cell identification number in scheduled cells; and/or, a first PUSCH satisfying a timing requirement for semi-persistent CSI reporting in a time domain in a scheduled PUSCH; and/or, a PUSCH of a cell with a smallest serving cell identification number in cells where a first PUSCH satisfying a timing requirement for semi-persistent CSI reporting in a time domain in a scheduled PUSCH is located. The present disclosure is not limited to this, the default PUSCH may further be other PUSCH defined according to other rule.

In the above embodiments, the cell where the default PUSCH is located may be a Pcell or a PScell or a PUCCH Scell, the present disclosure is not limited to this.

In the embodiments of the present disclosure, in some further embodiments, the DCI format schedules a PUSCH on more than one cell and/or uplink carrier; the terminal equipment transmits a CSI report on one or more than one of the more than one cell and/or uplink carrier.

For example, DCI format 0_X schedules a PUSCH on one or more cells and/or uplink carriers when triggering or activating semi-persistent CSI reporting. When scheduling a PUSCH on multiple cells and/or uplink carriers, the terminal equipment transmits a CSI report on a PUSCH of one or some or all of cells and/or uplink carrier. When scheduling a PUSCH on one cell and/or uplink carrier, the terminal equipment transmits the CSI report by using the same method as that in the preceding embodiments. Thereby, since the network device triggers the terminal equipment to transmit the CSI report on one or more or all of the cells and/or uplink carriers via the same DCI, and may schedule UL-SCH data transmission of multiple cells via the same DCI while triggering CSI reporting, and in a case where a bandwidth of each carrier is small, the CSI feedback efficiency can be improved, at the same time, the scheduling flexibility and data transmission throughput can be increased.

In the above embodiments, the DCI format may include a field for indicating a cell and/or uplink carrier, this field indicates the more than one cell and/or uplink carrier.

For example, DCI format 0_X includes a field for indicating a cell and/or an uplink carrier, such as a carrier indication field, which may indicate one or more cells and/or uplink carriers. In the case of indicating that multiple cells and/or uplink carriers are scheduled, the terminal equipment transmits a CSI report on a PUSCH of more than one cell and/or uplink carrier.

In the above embodiments, the contents of the CSI report on different PUSCHs may be the same or may be different.

In some implementations, the DCI format includes a field for triggering or activating CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

For example, DCI format 0_X includes a field for triggering or activating CSI, such as a CSI request field, CSI reports on different PUSCHs are the same (repeated), and/or, different PUSCHs are respectively used to carry different CSI reports corresponding to trigger states indicated in this field (one trigger state may correspond to one or more CSI reports), and/or, different PUSCHs are respectively used to carry different parts of the CSI report (for example, carry Part 1 and Part 2 respectively).

In some implementations, the DCI format includes multiple fields for triggering or activating CSI reporting, different PUSCHs are respectively used to carry different CSI reports corresponding to trigger states associated with fields for triggering or activating CSI reporting.

For example, DCI format 0_X includes multiple fields for triggering or activating CSI, such as a CSI request field, different fields correspond to different cells and/or uplink carriers respectively, that is, different PUSCHs are respectively used to carry different CSI reports corresponding to trigger states indicated in fields for triggering or activating CSI.

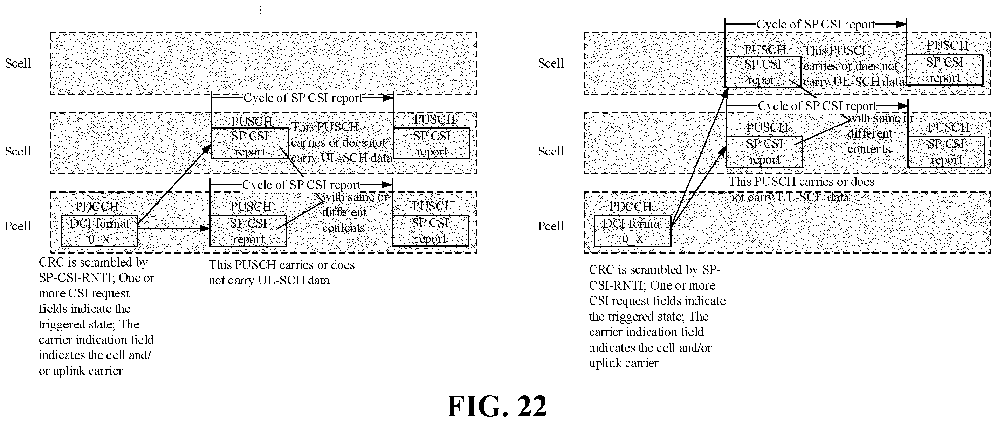

FIG. 22 is a schematic diagram of an example of semi-persistent CSI reporting.

As shown in FIG. 22, in this example, the CRC of DCI format 0_X is scrambled by an SP-CSI-RNTI, one or more CSI request fields indicate a triggered state, the carrier indication field indicates a cell and/or uplink carrier, the left side of FIG. 22 shows a situation in which the indicated cell is a Pcell and a Scell, the right side of FIG. 22 shows a situation in which the indicated cells are two Scells, and the terminal equipment may transmit a CSI report on two cells and/or uplink carriers, and the contents of the CSI reports on two cells and/or uplink carriers may be the same or may be different. In this example, the PUSCH carries or does not carry UL-SCH data. In this example, DCI format 0_X schedules two PUSCHs.

In FIG. 15 to FIG. 22, that SP-CSI reporting periods on different cells and/or uplink carriers are the same is taken as an example, but the present disclosure is not limited to this, and the SP-CSI reporting periods on different cells and/or uplink carriers may be the same or may be different.

In the embodiments of the present disclosure, CRC of the DCI format may be scrambled by an SP-CSI-RNTI, the present disclosure is not limited to this.

In the embodiments of the present disclosure, the terminal equipment may further validate validity of the DCI format for semi-persistent CSI activation.

In some embodiments, the terminal equipment validates the validity according to a field for indicating a cell and/or an uplink carrier and/or a field for indicating a hybrid automatic repeat request (HARQ) process ID and/or a field for indicating a redundancy version (RV) in the DCI format.

For example, the DCI format includes multiple fields for indicating the HARQ process ID, and the terminal equipment validates the above validity according to some or all of the fields for indicating a cell and/or uplink carrier in the DCI format.

For another example, the DCI format includes multiple fields for indicating the RV, and the terminal equipment validates the above validity according to some or all of the fields for indicating the RV in the DCI format.

For a further example, the DCI format includes one or more fields for indicating a cell and/or uplink carrier, and the terminal equipment validates the above validity according to some or all of the fields for indicating a cell and/or uplink carrier in the DCI format.

In each of the above embodiments, each of the above embodiments for validating the validity may be used separately or in combination, the present disclosure does not make limitations in this regard. In each of the above embodiments, if it is validated that the DCI format is invalid, the terminal equipment ignores or discards the DCI format. Or, if it is validated that the DCI format is invalid, the terminal equipment assumes that a CRC of the DCI format does not match, or that the CRC check fails.

In each of the above embodiments, the field in a valid DCI format should satisfy certain conditions.

For example, the field for indicating a cell and/or uplink carrier should indicate one cell and/or uplink carrier, and/or, the cell and/or uplink carrier indicated in the field is a Pcell or a PScell or a PUCCH Scell. For another example, this field should be a specific value that does not correspond to any cell and/or uplink carrier.

In addition, if DCI format 0_X includes multiple fields for indicating a HARQ process ID (such as a HARQ process number field) and/or multiple fields for indicating a RV (such as a redundancy version field), multiple fields should satisfy the following conditions. Or, a field for indicating a HARQ process ID and/or a field for indicating a RV corresponding to a cell and/or uplink carrier indicated in a field for indicating a cell and/or uplink carrier should satisfy the following conditions. Optionally, the terminal equipment ignores other fields for indicating the HARQ process ID and/or fields for indicating the RV.

These conditions refer to configurations shown in the following table.

|  | DCI format 0_1 |
| --- | --- |
| HARQ process number | set to all '0's |
| Redundancy version | set to '00' |

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, semi-persistent CSI reporting is realized in a case where the DCI format can schedule PUSCHs of multiple cells.

Embodiments of a fourth aspect

Embodiments of the present disclosure provide a method for receiving a CSI report, applied to a network device side, being processing on a network device side corresponding to the method in the embodiments of the third aspect, the same contents as the embodiments of the third aspect are not repeated.

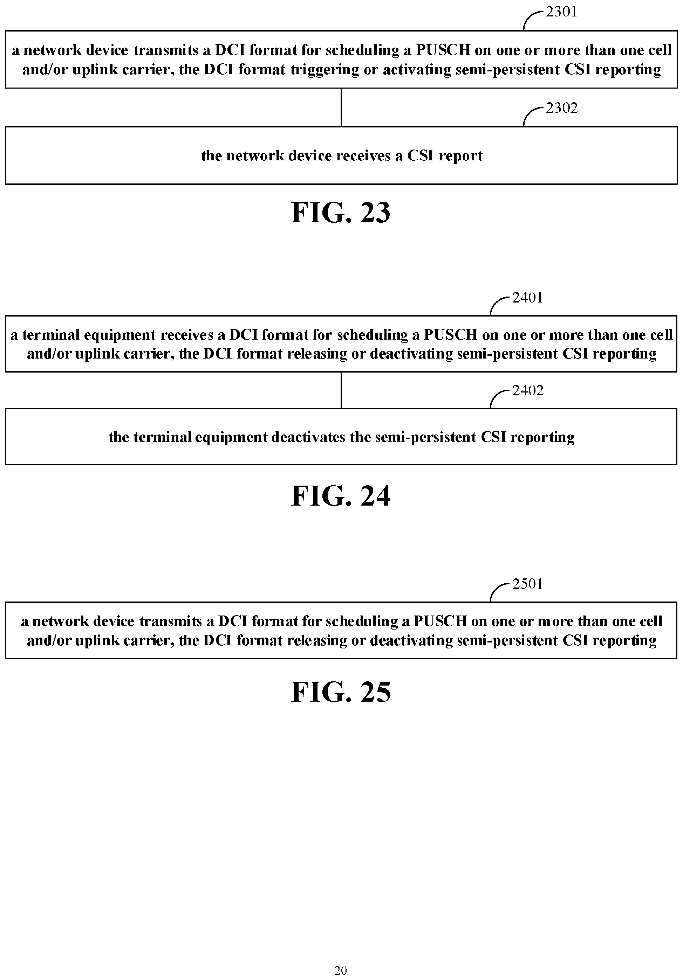

FIG. 23 is a schematic diagram of a method for receiving a CSI report in the embodiments of the present disclosure, as shown in FIG. 23, the method includes:

2301, a network device transmits a DCI format for scheduling a PUSCH on one or more than one cell and/or uplink carrier, the DCI format triggering or activating semi-persistent CSI reporting; and

2302, the network device receives a CSI report.

It should be noted that the above FIG. 23 is only schematic description of the embodiments of the present disclosure, but the present disclosure is not limited to this. For example, an execution order of each operation may be adjusted appropriately, moreover some other operations may be increased or operations therein may be reduced. Persons skilled in the art may make appropriate modifications according to the above contents, not limited to the records in the above FIG. 23.

According to the embodiments of the present disclosure, semi-persistent CSI reporting is realized in a case where the DCI format can schedule PUSCHs of multiple cells.

In some embodiments, the DCI format schedules a PUSCH on one cell and/or uplink carrier, and the network device receives a CSI report on the one cell and/or uplink carrier.

In some embodiments, in a case where the DCI format triggers or activates semi-persistent CSI reporting, the DCI format only schedules a PUSCH on one cell and/or uplink carrier.

In some embodiments, the DCI format includes a field for indicating a cell and/or an uplink carrier, the field indicating one cell and/or uplink carrier; the network device receives a CSI report on the cell and/or uplink carrier indicated in this field.

In some embodiments, the network device receives the CSI report on a cell and/or uplink carrier that is default or configured by signaling and used for transmitting the CSI report.

In the above embodiments, in some implementations, the DCI format includes a field for indicating a cell and/or uplink carrier, the field does not indicate a cell and/or uplink carrier.

In the above embodiments, in some implementations, the DCI format includes a field for indicating a cell and/or uplink carrier, and the terminal equipment ignores this field.

In the above embodiments, in some implementations, the DCI format includes a field for requesting or triggering CSI reporting, which is located before a field for indicating a cell and/or uplink carrier.

In the above implementations, the DCI format does not include a field for indicating a cell and/or uplink carrier when triggering or activating semi-persistent CSI reporting.

In the above embodiments, the cell that is default and used for transmitting a CSI report may be a Pcell or a PScell or a PUCCH Scell.

In some embodiments, the DCI format schedules a PUSCH on one or more than one cell and/or uplink carrier; the network device receives a CSI report on one of the one or more than one cell and/or uplink carrier.

In each of the above embodiments, the DCI format may include a field for requesting or triggering CSI reporting, a value of this field corresponds to a CSI trigger state.

In the above embodiments, a length of the field may be configured by a higher-layer parameter, and the higher-layer parameter is DCI format specific or shared by the DCI format and other DCI format.

In the above embodiments, a length of the field may further be determined by the terminal equipment according to the number of trigger states in a configured trigger state list.

In each of the above embodiments, the one cell and/or uplink carrier is a cell and/or uplink carrier that is default or configured by signaling and used for transmitting a CSI report.

For example, the cell that is default and used for transmitting a CSI report may be at least one of the following:

a cell with a smallest serving cell identification number in scheduled cells;

a cell where a first PUSCH satisfying a timing requirement for semi-persistent CSI reporting in a time domain in a scheduled PUSCH is located; and

a cell with a smallest serving cell identification number in cells where a first PUSCH satisfying a timing requirement for semi-persistent CSI reporting in a time domain in a scheduled PUSCH is located.

For another example, the cell that is default and used for transmitting a CSI report may be a Pcell or a PScell or a PUCCH Scell.

In some embodiments, the network device receives the CSI report on a default PUSCH.

For example, the default PUSCH may be at least one of the following:

a PUSCH of a cell with a smallest serving cell identification number in scheduled cells;

a first PUSCH satisfying a timing requirement for semi-persistent CSI reporting in a time domain in a scheduled PUSCH; and

a PUSCH of a cell with a smallest serving cell identification number in cells where a first PUSCH satisfying a timing requirement for semi-persistent CSI reporting in a time domain in a scheduled PUSCH is located.

For another example, the cell where the default PUSCH is located may be a Pcell or a PScell or a PUCCH Scell.

In some embodiments, the DCI format includes a field for indicating a cell and/or an uplink carrier.

In the above embodiments, the cell and/or uplink carrier that is default or configured by signaling and used for transmitting a CSI report is within a range of one or more cells and/or uplink carriers indicated in the field, or is not within the range of one or more cells and/or uplink carriers indicated in the field.

In some embodiments, the DCI format schedules a PUSCH on more than one cell and/or uplink carrier; the network device receives a CSI report on one or more than one of the more than one cell and/or uplink carrier.

In the above embodiments, the DCI format may further include a field for indicating a cell and/or uplink carrier, this field indicates the more than one cell and/or uplink carrier.

In the above embodiments, the contents of the CSI reports on different PUSCHs may be the same or different.

In the above embodiments, the DCI format may further include a field for triggering or activating CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

In the above embodiments, the DCI format may further include multiple fields for triggering or activating CSI reporting, different PUSCHs are respectively used to carry different CSI reports corresponding to trigger states associated with fields for requesting or triggering CSI reporting.

In each of the above embodiments, CRC of the DCI format may be scrambled by an SP-CSI-RNTI.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, semi-persistent CSI reporting is realized in a case where the DCI format can schedule PUSCHs of multiple cells.

Embodiments of a fifth aspect

Embodiments of the present disclosure provide a method for releasing or deactivating semi-persistent CSI reporting, applied in a terminal equipment side.

FIG. 24 is a schematic diagram of a method for releasing or deactivating semi-persistent CSI reporting in the embodiments of the present disclosure, as shown in FIG. 24, the method includes:

2401, a terminal equipment receives a DCI format for scheduling a PUSCH on one or more than one cell and/or uplink carrier, the DCI format releasing or deactivating semi-persistent CSI reporting; and

2402, the terminal equipment deactivates the semi-persistent CSI reporting.

It should be noted that the above FIG. 24 is only schematic description of the embodiments of the present disclosure, by taking the terminal equipment as an example, but the present disclosure is not limited to this. For example, an execution order of each operation may be adjusted appropriately, moreover some other operations may be increased or operations therein may be reduced. In addition, objects of the above operations may further be adjusted. Persons skilled in the art may make appropriate modifications according to the above contents, not limited to the records in the above FIG. 24.

According to the embodiments of the present disclosure, releasing or deactivation of semi-persistent CSI reporting is realized in a case where the DCI format can schedule PUSCHs of multiple cells.

In some embodiments, the DCI format includes a field for indicating a cell and/or an uplink carrier, the field indicating one cell or uplink carrier, and/or, a cell and/or uplink carrier indicated in the field is a Pcell or a PScell or a PUCCH Scell, and/or, the field is a specific value that does not correspond to any cell and/or uplink carrier.

In the above embodiments, the terminal equipment further takes into account a field for indicating a scheduled cell and/or uplink carrier when validating.

In some embodiments, the terminal equipment validates validity of the DCI format for semi-persistent CSI releasing/deactivation.

For example, the terminal equipment may validate the validity according to a field for indicating a cell and/or uplink carrier and/or a field for indicating a HARQ process ID and/or a field for indicating a RV and/or multiple fields for indicating a MCS and/or multiple fields for indicating frequency domain resource (RB) assignment in the DCI format.

In the above example, the DCI format may include multiple fields for indicating the HARQ process ID, and the terminal equipment may validate the above validity according to some or all of the fields for indicating a cell and/or uplink carrier in the DCI format.

In the above example, the DCI format may include multiple fields for indicating the RV, and the terminal equipment may validate the above validity according to some or all of the fields for indicating the RV in the DCI format.

In the above example, the DCI format may further include one or more fields for indicating a cell and/or uplink carrier, and the terminal equipment may validate the above validity according to some or all of the fields for indicating a cell and/or uplink carrier in the DCI format.

In the above example, the DCI format may further include multiple fields for indicating the MCS, and the terminal equipment may validate the above validity according to some or all of the fields for indicating a cell and/or uplink carrier in the DCI format.

In the above example, the DCI format may further include a field for indicating the frequency domain resource (RB) assignment, and the terminal equipment may validate the above validity according to some or all of the fields for indicating a cell and/or uplink carrier in the DCI format.

In each of the above examples, if the DCI format is invalid, the terminal equipment may further ignore or discard the DCI format. Or, if it is validated that the DCI format is invalid, the terminal equipment assumes that a CRC of the DCI format does not match, or that the CRC check fails.

In the embodiments of the present disclosure, if DCI format 0_X includes multiple fields for indicating a HARQ process ID (such as a HARQ process number field) and/or multiple fields for indicating a RV (such as a redundancy version field) and/or multiple fields for indicating MCS and/or multiple fields for indicating frequency domain resource (RB) assignment, the multiple fields should satisfy the following conditions. Or, the fields corresponding to a cell and/or uplink carrier indicated in a field for indicating a scheduled cell and/or uplink carrier should satisfy the following conditions. Optionally, the terminal equipment ignores other fields for indicating the HARQ process ID.

These conditions refer to configurations listed in the following table.

| | DCI format 0_1 |
|---|---|
| HARQ process number | set to all '0's |
| Modulation and coding scheme | set to all '1's |
| Resource block assignment | If higher layer configures RA type 0 only, set to all '0's; If higher layer configures RA type 1 only, set to all '1's; If higher layer configures dynamic switch between RA type 0 and 1, then if MSB is'0', set to all '0's; else, set to all '1's |
| Redundancy version | set to '00' |

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, releasing or deactivation of semi-persistent CSI reporting is realized in a case where the DCI format can schedule PUSCHs of multiple cells.

Embodiments of a sixth aspect

Embodiments of the present disclosure provide a method for releasing or deactivating semi-persistent CSI reporting, applied to a network device side, being processing on a network device side corresponding to the method in the embodiments of the fifth aspect, the same contents as the embodiments of the fifth aspect are not repeated.

FIG. 25 is a schematic diagram of a method for releasing or deactivating semi-persistent CSI reporting in the embodiments of the present disclosure, as shown in FIG. 25, the method includes:

2501, a network device transmits a DCI format for scheduling a PUSCH on one or more than one cell and/or uplink carrier, the DCI format releasing or deactivating semi-persistent CSI reporting.

It should be noted that the above FIG. 25 is only schematic description of the embodiments of the present disclosure, but the present disclosure is not limited to this. For example, other some operations can be increased. Persons skilled in the art may make appropriate modifications according to the above contents, not limited to the records in the above FIG. 25.

According to the embodiments of the present disclosure, releasing or deactivation of semi-persistent CSI reporting is realized in a case where the DCI format can schedule PUSCHs of multiple cells.

In some embodiments, the DCI format includes a field for indicating a cell and/or an uplink carrier, the field indicating one cell or uplink carrier, and/or, a cell and/or uplink carrier indicated in the field is a Pcell or a PScell or a PUCCH Scell, and/or, the field is a specific value that does not correspond to any cell and/or uplink carrier.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, releasing or deactivation of semi-persistent CSI reporting is realized in a case where the DCI format can schedule PUSCHs of multiple cells.

In the above embodiments of the first to sixth aspects, the DCI format (denoted as DCI format 0_X) that supports scheduling of a PUSCH on one or more cells and/or uplink carriers via one DCI is described. The following table is a specific example of fields of DCI format 0_X.

Table: Summary of fields of DCI format 0_X

| Fields in DCI format 0_X | Types | comments |
|---|---|---|
| Identifier for DCI formats | Type-1 | A single field is enough. |
| Carrier indicator | Type-1 | A single field should be enough to indicate co-scheduled cells |
| 1st downlink assignment index | Type-1 | These fields provide information related to HARQ-ACK feedback. A single field is enough. |
| 2nd downlink assignment index | Type-1 | |
| CSI request | Type-1 | These fields provide information related to UCI on PUSCH. The CSI reports triggered by the CSI request can be carried on PUSCH on one of the co-scheduled cells. A single field is enough. |
| beta_offset indicator | Type-1 | |
| UL-SCH indicator | Type-1 | |
| Modulation and coding scheme | Type-2 | These fields provide information related to TB. Since different TBs are transmitted on different cells, it is straightforward to include multiple fields, one-to-one mapping to cells. |
| New data indicator | Type-2 | |
| Redundancy version | Type-2 | |
| CBG transmission information (CBGTI) | If support: Type-2 | |
| HARQ process number | Type-2 | |
| UL/SUL indicator | If support: Type-3 | These fields provide information related to resource allocation, antenna or RS. The number of the fields varies in different scenarios (e.g. intra-band/inter-band CA). |
| Bandwidth part indicator | Type-3 | |
| Frequency domain resource assignment | Type-3 | |
| Time domain resource assignment | Type-3 | |
| Frequency hopping flag | Type-3 | |
| TPC command for scheduled PUSCH | Type-3 | |
| SRS resource indicator | Type-3 | |
| Precoding information and number of layers | Type-3 | |
| Antenna port(s) | Type-3 | |
| SRS request | Type-3 | |
| PTRS-DMRS association | Type-3 | |
| DMRS sequence initialization | Type-3 | |

In the above example, "type-1 field" is a single field indicating public information to all co-scheduled cells, or a single field indicating separate information to each co-scheduled cell via a joint indication; or a single field indicating information only to one of co-scheduled cells. DCI format 0_X only includes one said field.

In the above example, "type-2 field" is a separate field for each co-scheduled cell, or a separate field for each subgroup that includes one or more co-scheduled cells, wherein a single field is generally applied to co-scheduled cells that belong to the same subgroup. DCI format 0_X includes multiple said fields.

In the above example, "type-3 field" is shared or separated from each co-scheduled cell or each subgroup. DCI format 0_X includes one or more said fields, depending on an explicit configuration or determined by implicit means, such as in-band or inter-band CA, FR1, or FR2.

In the above example, the UL-SCH indicator is used to indicate whether a PUSCH for carrying a CSI report simultaneously carries UL-SCH data.

In the above example, the field refers to a field, and may also be called an information field.

Embodiments of a seventh aspect

Embodiments of the present disclosure provide an apparatus for reporting aperiodic CSI. The apparatus for example may be a terminal equipment, or may be one or more parts or components configured in the terminal equipment. The contents same as the embodiments of the first to second aspects are not repeated.

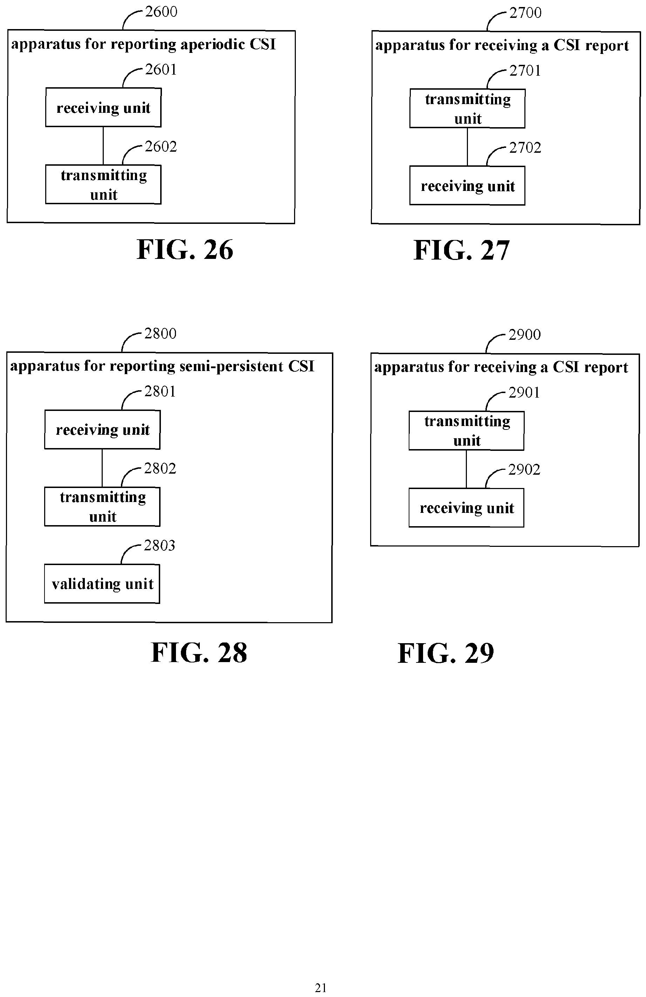

FIG. 26 is a schematic diagram of an apparatus for reporting aperiodic CSI in the embodiments of the present disclosure. As shown in FIG. 26, the apparatus 2600 for reporting aperiodic CSI in the embodiments of the present disclosure comprises:

a receiving unit 2601 configured to receive a DCI format for scheduling a PUSCH on one or more than one cell and/or uplink carrier, the DCI format requesting or triggering aperiodic CSI reporting; and
a transmitting unit 2602 configured to transmit a CSI report.

In some embodiments, the DCI format schedules a PUSCH on one cell and/or uplink carrier, and the transmitting unit 2602 transmits the CSI report on the one cell and/or uplink carrier.

In some embodiments, in a case where the DCI format requests or triggers aperiodic CSI reporting, the DCI format only schedules a PUSCH on one cell and/or uplink carrier.

In some embodiments, the DCI format includes a field for indicating a cell and/or an uplink carrier, the field indicating one cell and/or uplink carrier; the transmitting unit 2602 transmits the CSI report on the cell and/or uplink carrier indicated in this field.

In some embodiments, the transmitting unit 2602 transmits the CSI report on a cell and/or uplink carrier that is default or configured by signaling and used for transmitting the CSI report.

In some embodiments, the DCI format includes a field for indicating a cell and/or an uplink carrier, the field does not indicate a cell and/or uplink carrier.

In some embodiments, the DCI format includes a field for indicating a cell and/or an uplink carrier, the transmitting unit 2602 ignores the field.

In some embodiments, the DCI format includes a field for requesting or triggering CSI reporting, which is located before a field for indicating a cell and/or uplink carrier.

In some embodiments, the DCI format does not include a field for indicating a cell and/or uplink carrier when requesting or triggering aperiodic CSI reporting.

In some embodiments, the cell that is default and used for transmitting a CSI report is a Pcell or a PScell or a PUCCH Scell.

In some embodiments, the DCI format schedules a PUSCH on one or more than one cell and/or uplink carrier; the transmitting unit 2602 transmits the CSI report on one of the one or more than one cell and/or uplink carrier.

In some embodiments, the DCI format includes a field for requesting or triggering CSI reporting, a value of the field corresponds to a CSI aperiodic trigger state.

In some embodiments, a length of the field is configured by a higher-layer parameter, and the higher-layer parameter is DCI format specific or shared by the DCI format and other DCI format.

In some embodiments, a length of the field is determined by the terminal equipment according to the number of trigger states in a configured trigger state list.

In some embodiments, the one cell and/or uplink carrier is a cell and/or uplink carrier that is default or configured by signaling and used for transmitting a CSI report.

In some embodiments, the cell that is default and used for transmitting a CSI report is at least one of the following:

a cell with a smallest serving cell identification number in scheduled cells;
a cell where a first PUSCH satisfying a timing requirement for aperiodic CSI reporting in a time domain in a scheduled PUSCH is located; and
a cell with a smallest serving cell identification number in cells where a first PUSCH satisfying a timing requirement for aperiodic CSI reporting in a time domain in a scheduled PUSCH is located.

In some embodiments, the cell that is default and used for transmitting a CSI report is a Pcell or a PScell or a PUCCH Scell.

In some other embodiments, the transmitting unit 2602 transmits the CSI report on a default PUSCH.

In some embodiments, the default PUSCH is at least one of the following:

a PUSCH of a cell with a smallest serving cell identification number in scheduled cells;

a first PUSCH satisfying a timing requirement for aperiodic CSI reporting in a time domain in a scheduled PUSCH; and

a PUSCH of a cell with a smallest serving cell identification number in cells where a first PUSCH satisfying a timing requirement for aperiodic CSI reporting in a time domain in a scheduled PUSCH is located.

In some embodiments, the cell where the default PUSCH is located is a Pcell or a PScell or a PUCCH Scell.

In some embodiments, the DCI format includes a field for indicating a cell and/or an uplink carrier.

In some embodiments, the cell and/or uplink carrier that is default or configured by signaling and used for transmitting a CSI report is within a range of one or more cells and/or uplink carriers indicated in the field, or is not within the range of one or more cells and/or uplink carriers indicated in the field.

In some embodiments, the DCI format schedules a PUSCH on more than one cell and/or uplink carrier; the transmitting unit 2602 transmits the CSI report on one or more than one of the more than one cell and/or uplink carrier.

In some embodiments, the DCI format includes a field for indicating a cell and/or an uplink carrier, the field indicates the more than one cell and/or uplink carrier.

In some embodiments, the contents of the CSI reports on different PUSCHs are the same or different.

In some embodiments, the DCI format includes a field for requesting or triggering CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

In some embodiments, the DCI format includes multiple fields for requesting or triggering CSI reporting, different PUSCHs are respectively used to carry different CSI reports corresponding to trigger states associated with fields for requesting or triggering CSI reporting.

In some embodiments, CRC of the DCI format is scrambled by a C-RNTI or by a MCS-C-RNTI.

In some embodiments, the receiving unit 2601 further receives configuration information for configuring the terminal equipment to monitor the DCI format in a UE-specific search space.

In some embodiments, the receiving unit 2601 further receives configuration information for configuring whether the DCI format supports triggering CSI reporting or whether the DCI format is used to trigger CSI reporting.

In some embodiments, the receiving unit 2601 further receives configuration information for configuring a cell and/or uplink carrier that may be scheduled by the DCI format.

In some embodiments, the more than one uplink carrier belong to different cells respectively, or at least two of the more than one uplink carrier belong to different cells.

Embodiments of the present disclosure further provide an apparatus for receiving a CSI report. The apparatus may be a network device, or may be one or more parts or components configured in the network device. The contents same as the embodiments of the first to second aspect are not repeated.

FIG. 27 is a schematic diagram of an apparatus for receiving a CSI report in the embodiments of the present disclosure. As shown in FIG. 27, the apparatus 2700 for receiving a CSI report in the embodiments of the present disclosure comprises:

a transmitting unit 2701 configured to transmit a DCI format for scheduling a PUSCH on one or more than one cell and/or uplink carrier, the DCI format requesting or triggering aperiodic CSI reporting; and

a receiving unit 2702 configured to receive a CSI report.

In some embodiments, the DCI format schedules a PUSCH on one cell and/or uplink carrier, and the receiving unit 2702 receives the CSI report on the one cell and/or uplink carrier.

In some embodiments, in a case where the DCI format requests or triggers aperiodic CSI reporting, the DCI format only schedules a PUSCH on one cell and/or uplink carrier.

In some embodiments, the DCI format includes a field for indicating a cell and/or an uplink carrier, the field indicating one cell and/or uplink carrier; the receiving unit 2702 receives the CSI report on the cell and/or uplink carrier indicated in this field.

In some embodiments, the receiving unit 2702 receives the CSI report on a cell and/or uplink carrier that is default or configured by signaling and used for receiving the CSI report.

In some embodiments, the DCI format includes a field for indicating a cell and/or an uplink carrier, the field does not indicate a cell and/or uplink carrier.

In some embodiments, the DCI format includes a field for indicating a cell and/or an uplink carrier, the terminal equipment ignores the field.

In some embodiments, the DCI format includes a field for requesting or triggering CSI reporting, which is located before a field for indicating a cell and/or uplink carrier.

In some embodiments, the DCI format does not include a field for indicating a cell and/or uplink carrier when requesting or triggering aperiodic CSI reporting.

In some embodiments, the cell that is default and used for receiving a CSI report is a Pcell or a PScell or a PUCCH Scell.

In some embodiments, the DCI format schedules a PUSCH on one or more than one cell and/or uplink carrier; the receiving unit 2702 receives the CSI report on one of the one or more than one cell and/or uplink carrier.

In some embodiments, the DCI format includes a field for requesting or triggering CSI reporting, a value of the field corresponds to a CSI aperiodic trigger state.

In some embodiments, a length of the field is configured by a higher-layer parameter, and the higher-layer parameter is DCI format specific or shared by the DCI format and other DCI format.

In some embodiments, a length of the field is determined by the terminal equipment according to the number of trigger states in a configured trigger state list.

In some embodiments, the one cell and/or uplink carrier is a cell and/or uplink carrier that is default or configured by signaling and used for receiving a CSI report.

In some embodiments, the cell that is default and used for receiving a CSI report is at least one of the following:

a cell with a smallest serving cell identification number in scheduled cells;

a cell where a first PUSCH satisfying a timing requirement for aperiodic CSI reporting in a time domain in a scheduled PUSCH is located; and

a cell with a smallest serving cell identification number in cells where a first PUSCH satisfying a timing requirement for aperiodic CSI reporting in a time domain in a scheduled PUSCH is located.

In some embodiments, the cell that is default and used for receiving a CSI report is a Pcell or a PScell or a PUCCH Scell.

In some other embodiments, the receiving unit 2702 receives the CSI report on a default PUSCH.

In some embodiments, the default PUSCH is at least one of the following:

a PUSCH of a cell with a smallest serving cell identification number in scheduled cells;

a first PUSCH satisfying a timing requirement for aperiodic CSI reporting in a time domain in a scheduled PUSCH; and

a PUSCH of a cell with a smallest serving cell identification number in cells where a first PUSCH satisfying a timing requirement for aperiodic CSI reporting in a time domain in a scheduled PUSCH is located.

In some embodiments, the cell where the default PUSCH is located is a Pcell or a PScell or a PUCCH Scell.

In some embodiments, the DCI format includes a field for indicating a cell and/or an uplink carrier.

In some embodiments, the cell and/or uplink carrier that is default or configured by signaling and used for receiving a CSI report is within a range of one or more cells and/or uplink carriers indicated in the field, or is not within the range of one or more cells and/or uplink carriers indicated in the field.

In some embodiments, the DCI format schedules a PUSCH on more than one cell and/or uplink carrier; the network device receives the CSI report on one or more than one of the more than one cell and/or uplink carrier.

In some embodiments, the DCI format includes a field for indicating a cell and/or an uplink carrier, the field indicates the more than one cell and/or uplink carrier.

In some embodiments, the contents of the CSI reports on different PUSCHs are the same or different.

In some embodiments, the DCI format includes a field for requesting or triggering CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

In some embodiments, the DCI format includes multiple fields for requesting or triggering CSI reporting, different PUSCHs are respectively used to carry different CSI reports corresponding to trigger states associated with fields for requesting or triggering CSI reporting.

In some embodiments, CRC of the DCI format is scrambled by a C-RNTI or by a MCS-C-RNTI.

In some embodiments, the transmitting unit 2701 further transmits configuration information for configuring the terminal equipment to monitor the DCI format in a UE-specific search space.

In some embodiments, the transmitting unit 2701 further transmits configuration information for configuring whether the DCI format supports triggering CSI reporting or whether the DCI format is used to trigger CSI reporting.

In some embodiments, the transmitting unit 2701 further transmits configuration information for configuring a cell and/or uplink carrier that may be scheduled by the DCI format.

In some embodiments, the more than one uplink carrier belong to different cells respectively, or at least two of the more than one uplink carrier belong to different cells.

Embodiments of the present disclosure further provide an apparatus for reporting semi-persistent CSI. The apparatus for example may be a terminal equipment, or may be one or more parts or components configured in the terminal equipment. The contents same as the embodiments of the third to fourth aspects are not repeated.

FIG. 28 is a schematic diagram of an apparatus for reporting semi-persistent CSI in the embodiments of the present disclosure. As shown in FIG. 28, the apparatus 2800 for reporting semi-persistent CSI in the embodiments of the present disclosure comprises:

a receiving unit 2801 configured to receive a DCI format for scheduling a PUSCH on one or more than one cell and/or uplink carrier, the DCI format triggering or activating semi-persistent CSI reporting; and
a transmitting unit 2802 configured to transmit a CSI report.

In some embodiments, the DCI format schedules a PUSCH on one cell and/or uplink carrier, and the transmitting unit 2802 transmits the CSI report on the one cell and/or uplink carrier.

In some embodiments, in a case where the DCI format triggers or activates semi-persistent CSI reporting, the DCI format only schedules a PUSCH on one cell and/or uplink carrier.

In some embodiments, the DCI format includes a field for indicating a cell and/or an uplink carrier, the field indicating one cell and/or uplink carrier; the transmitting unit 2802 transmits the CSI report on the cell and/or uplink carrier indicated in this field.

In some embodiments, the transmitting unit 2802 transmits the CSI report on a cell and/or uplink carrier that is default or configured by signaling and used for transmitting the CSI report.

In some embodiments, the DCI format includes a field for indicating a cell and/or an uplink carrier, the field does not indicate a cell and/or uplink carrier.

In some embodiments, the DCI format includes a field for indicating a cell and/or an uplink carrier, the transmitting unit 2802 ignores the field.

In some embodiments, the DCI format includes a field for requesting or triggering CSI reporting, which is located before a field for indicating a cell and/or uplink carrier.

In some embodiments, the DCI format does not include a field for indicating a cell and/or uplink carrier when triggering or activating semi-persistent CSI reporting.

In some embodiments, the cell that is default and used for transmitting a CSI report is a Pcell or a PScell or a PUCCH Scell.

In some embodiments, the DCI format schedules a PUSCH on one or more than one cell and/or uplink carrier; the transmitting unit 2802 transmits the CSI report on one of the one or more than one cell and/or uplink carrier.

In some embodiments, the DCI format includes a field for requesting or triggering CSI reporting, a value of the field corresponds to a CSI trigger state.

In some embodiments, a length of the field is configured by a higher-layer parameter, and the higher-layer parameter is DCI format specific or shared by the DCI format and other DCI format.

In some embodiments, a length of the field is determined by the terminal equipment according to the number of trigger states in a configured trigger state list.

In some embodiments, the one cell and/or uplink carrier is a cell and/or uplink carrier that is default or configured by signaling and used for transmitting a CSI report.

In some embodiments, the cell that is default and used for transmitting a CSI report is at least one of the following:

a cell with a smallest serving cell identification number in scheduled cells;
a cell where a first PUSCH satisfying a timing requirement for semi-persistent CSI reporting in a time domain in a scheduled PUSCH is located; and
a cell with a smallest serving cell identification number in cells where a first PUSCH satisfying a timing requirement for semi-persistent CSI reporting in a time domain in a scheduled PUSCH is located.

In some embodiments, the cell that is default and used for transmitting a CSI report is a Pcell or a PScell or a PUCCH Scell.

In some other embodiments, the transmitting unit 2802 transmits the CSI report on a default PUSCH.

In some embodiments, the default PUSCH is at least one of the following:

a PUSCH of a cell with a smallest serving cell identification number in scheduled cells;
a first PUSCH satisfying a timing requirement for aperiodic CSI reporting in a time domain in a scheduled PUSCH; and
a PUSCH of a cell with a smallest serving cell identification number in cells where a first PUSCH satisfying a timing requirement for aperiodic CSI reporting in a time domain in a scheduled PUSCH is located.

In some embodiments, the cell where the default PUSCH is located is a Pcell or a PScell or a PUCCH Scell.

In some embodiments, the DCI format includes a field for indicating a cell and/or an uplink carrier.

In some embodiments, the cell and/or uplink carrier that is default or configured by signaling and used for transmitting a CSI report is within a range of one or more cells and/or uplink carriers indicated in the field, or is not within the range of one or more cells and/or uplink carriers indicated in the field.

In some embodiments, the DCI format schedules a PUSCH on more than one cell and/or uplink carrier; the transmitting unit 2802 transmits the CSI report on one or more than one of the more than one cell and/or uplink carrier.

In some embodiments, the DCI format includes a field for indicating a cell and/or an uplink carrier, the field indicates the more than one cell and/or uplink carrier.

In some embodiments, the contents of the CSI reports on different PUSCHs are the same or different.

In some embodiments, the DCI format includes a field for triggering or activating CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

In some embodiments, the DCI format includes multiple fields for triggering or activating CSI reporting, different PUSCHs are respectively used to carry different CSI reports corresponding to trigger states associated with fields for requesting or triggering CSI reporting.

In some embodiments, CRC of the DCI format is scrambled by an SP-CSI-RNTI.

In some embodiments, as shown in FIG. 28, the apparatus 2800 further comprises:
a validating unit 2803 configured to validate validity of the DCI format for activation of semi-persistent CSI.

In some embodiments, the validating unit 2803 validates the validity according to a field for indicating a cell and/or an uplink carrier and/or a field for indicating a HARQ process ID and/or a field for indicating a RV in the DCI format.

In some embodiments, the DCI format includes multiple fields for indicating the HARQ process ID, and the validating unit 2803 validates the above validity according to some or all of the fields for indicating a cell and/or uplink carrier in the DCI format.

In some embodiments, the DCI format includes multiple fields for indicating the RV, and the validating unit 2803 validates the above validity according to some or all of the fields for indicating the RV in the DCI format.

In some embodiments, the DCI format includes one or more fields for indicating a cell and/or uplink carrier, and the validating unit 2803 validates the above validity according to some or all of the fields for indicating a cell and/or uplink carrier in the DCI format.

In some embodiments, if the DCI format is invalid, the receiving unit 2801 ignores/discards the DCI format.

Embodiments of the present disclosure further provide an apparatus for receiving a CSI report. The apparatus may be a network device, or may be one or more parts or components configured in the network device. The contents same as the embodiments of the third to fourth aspect are not repeated.

FIG. 29 is a schematic diagram of an apparatus for receiving a CSI report in the embodiments of the present disclosure. As shown in FIG. 29, the apparatus 2900 for receiving a CSI report in the embodiments of the present disclosure comprises:

a transmitting unit 2901 configured to transmit a DCI format for scheduling a PUSCH on one or more than one cell and/or uplink carrier, the DCI format triggering or activating semi-persistent CSI reporting; and
a receiving unit 2902 configured to receive a CSI report.

In some embodiments, the DCI format schedules a PUSCH on one cell and/or uplink carrier, and the receiving unit 2902 receives the CSI report on the one cell and/or uplink carrier.

In some embodiments, in a case where the DCI format triggers or activates semi-persistent CSI reporting, the DCI format only schedules a PUSCH on one cell and/or uplink carrier.

In some embodiments, the DCI format includes a field for indicating a cell and/or an uplink carrier, the field indicating one cell and/or uplink carrier; the receiving unit 2902 receives the CSI report on the cell and/or uplink carrier indicated in this field.

In some embodiments, the receiving unit 2902 receives the CSI report on a cell and/or uplink carrier that is default or configured by signaling and used for receiving the CSI report.

In some embodiments, the DCI format includes a field for indicating a cell and/or an uplink carrier, the field does not indicate a cell and/or uplink carrier.

In some embodiments, the DCI format includes a field for indicating a cell and/or an uplink carrier, the terminal equipment ignores the field.

In some embodiments, the DCI format includes a field for requesting or triggering CSI reporting, which is located before a field for indicating a cell and/or uplink carrier.

In some embodiments, the DCI format does not include a field for indicating a cell and/or uplink carrier when triggering or activating semi-persistent CSI reporting.

In some embodiments, the cell that is default and used for receiving a CSI report is a Pcell or a PScell or a PUCCH Scell.

In some embodiments, the DCI format schedules a PUSCH on one or more than one cell and/or uplink carrier; the receiving unit 2902 receives the CSI report on one of the one or more than one cell and/or uplink carrier.

In some embodiments, the DCI format includes a field for requesting or triggering CSI reporting, a value of the field corresponds to a CSI trigger state.

In some embodiments, a length of the field is configured by a higher-layer parameter, and the higher-layer parameter is DCI format specific or shared by the DCI format and other DCI format.

In some embodiments, a length of the field is determined by the terminal equipment according to the number of trigger states in a configured trigger state list.

In some embodiments, the one cell and/or uplink carrier is a cell and/or uplink carrier that is default or configured by signaling and used for receiving a CSI report.

In some embodiments, the cell that is default and used for receiving a CSI report is at least one of the following:

a cell with a smallest serving cell identification number in scheduled cells;
a cell where a first PUSCH satisfying a timing requirement for semi-persistent CSI reporting in a time domain in a scheduled PUSCH is located; and
a cell with a smallest serving cell identification number in cells where a first PUSCH satisfying a timing requirement for semi-persistent CSI reporting in a time domain in a scheduled PUSCH is located.

In some embodiments, the cell that is default and used for receiving a CSI report is a Pcell or a PScell or a PUCCH Scell.

In some embodiments, the receiving unit 2902 receives the CSI report on a default PUSCH.

In some embodiments, the default PUSCH is at least one of the following:

a PUSCH of a cell with a smallest serving cell identification number in scheduled cells;
a first PUSCH satisfying a timing requirement for aperiodic CSI reporting in a time domain in a scheduled PUSCH; and
a PUSCH of a cell with a smallest serving cell identification number in cells where a first PUSCH satisfying a timing requirement for aperiodic CSI reporting in a time domain in a scheduled PUSCH is located.

In some embodiments, the cell where the default PUSCH is located is a Pcell or a PScell or a PUCCH Scell.

In some embodiments, the DCI format includes a field for indicating a cell and/or an uplink carrier.

In some embodiments, the cell and/or uplink carrier that is default or configured by signaling and used for receiving a CSI report is within a range of one or more cells and/or uplink carriers indicated in the field, or is not within the range of one or more cells and/or uplink carriers indicated in the field.

In some embodiments, the DCI format schedules PUSCHs on more than one cell and/or uplink carrier; and the network device receives the CSI report on one or more than one cell and/or uplink carriers of the more than one cell and/or uplink carrier.

In some embodiments, the DCI format includes a field for indicating a cell and/or an uplink carrier, the field indicates the more than one cell and/or uplink carrier.

In some embodiments, the contents of the CSI reports on different PUSCHs are the same or different.

In some embodiments, the DCI format includes a field for triggering or activating CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

In some embodiments, the DCI format includes multiple fields for triggering or activating CSI reporting, different PUSCHs are respectively used to carry different CSI reports corresponding to trigger states associated with fields for requesting or triggering CSI reporting.

In some embodiments, CRC of the DCI format is scrambled by an SP-CSI-RNTI.

Embodiments of the present disclosure further provide an apparatus for releasing or deactivating semi-persistent CSI reporting. The apparatus for example may be a terminal equipment, or may be one or more parts or components configured in the terminal equipment. The contents same as the embodiments of the fifth to sixth aspects are not repeated.

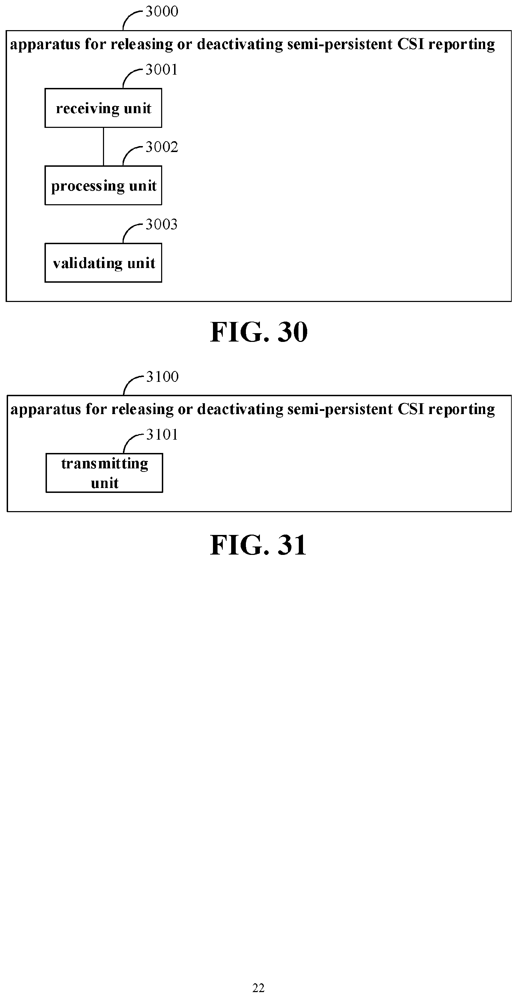

FIG. 30 is a schematic diagram of an apparatus for releasing or deactivating semi-persistent CSI reporting in the embodiments of the present disclosure. As shown in FIG. 30, the apparatus 3000 for releasing or deactivating semi-persistent CSI reporting in the embodiments of the present disclosure comprises:

a receiving unit 3001 configured to receive a DCI format for scheduling a PUSCH on one or more than one cell and/or uplink carrier, the DCI format releasing or deactivating semi-persistent CSI reporting; and
a processing unit 3002 configured to deactivate semi-persistent CSI reporting.

In some embodiments, the DCI format includes a field for indicating a cell and/or an uplink carrier, the field indicating one cell or uplink carrier, and/or, a cell and/or uplink carrier indicated in the field is a Pcell or a PScell or a PUCCH Scell, and/or, the field is a specific value that does not correspond to any cell and/or uplink carrier.

In some embodiments, as shown in FIG. 30, the apparatus 3000 further comprises:
a validating unit 3003 configured to validate validity of the DCI format for semi-persistent CSI releasing/deactivation.

In some embodiments, the validating unit 3003 validates the validity according to a field for indicating a cell and/or uplink carrier and/or a field for indicating a HARQ process ID and/or a field for indicating a RV and/or multiple fields for indicating a MCS and/or multiple fields for indicating frequency domain resource (RB) assignment in the DCI format.

In some embodiments, the DCI format includes multiple fields for indicating the HARQ process ID, and the validating unit 3003 validates the above validity according to some or all of the fields for indicating a cell and/or uplink carrier in the DCI format.

In some embodiments, the DCI format includes multiple fields for indicating the RV, and the validating unit 3003 validates the above validity according to some or all of the fields for indicating the RV in the DCI format.

In some embodiments, the DCI format includes one or more fields for indicating a cell and/or uplink carrier, and the validating unit 3003 validates the above validity according to some or all of the fields for indicating a cell and/or uplink carrier in the DCI format.

In some embodiments, the DCI format includes multiple fields for indicating the modulation and coding scheme (MCS), and the validating unit 3003 validates the above validity according to some or all of the fields for indicating a cell and/or uplink carrier in the DCI format.

In some embodiments, the DCI format includes a field for indicating the frequency domain resource (such as a resource block RB) assignment, and the validating unit 3003 validates the above validity according to some or all of the fields for indicating a cell and/or uplink carrier in the DCI format.

In some embodiments, if the DCI format is invalid, the validating unit 3003 ignores/discards the DCI format.

Embodiments of the present disclosure further provide an apparatus for releasing or deactivating semi-persistent CSI reporting. The apparatus may be a network device, or may be one or more parts or components configured in the network device. The contents same as the embodiments of the fifth to sixth aspect are not repeated.

FIG. 31 is a schematic diagram of an apparatus for releasing or deactivating semi-persistent CSI reporting in the embodiments of the present disclosure. As shown in FIG. 31, the apparatus 3100 for releasing or deactivating semi-persistent CSI reporting in the embodiments of the present disclosure comprises:
a transmitting unit 3101 configured to transmit a DCI format for scheduling a PUSCH on one or more than one cell and/or uplink carrier, the DCI format releasing or deactivating semi-persistent CSI reporting.

In some embodiments, the DCI format includes a field for indicating a cell and/or an uplink carrier, the field indicating one cell or uplink carrier, and/or, a cell and/or uplink carrier indicated in the field is a Pcell or a PScell or a PUCCH Scell, and/or, the field is a specific value that does not correspond to any cell and/or uplink carrier.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. Apparatuses 2600, 2700, 2800, 2900, 3000, 3100 may further comprise other components or modules. For detailed contents of these components or modules, relevant technologies may be referred to.

Moreover, for the sake of simplicity, FIG. 26 to FIG. 31 only exemplarily show a connection relationship or signal direction between components or modules, however persons skilled in the art should know that various relevant technologies such as bus connection can be used. The above components or modules may be realized by a hardware facility such as a processor, a memory, a transmitter, a receiver, etc. The embodiments of the present disclosure have no limitation to this.

As may be known from the above embodiments, aperiodic CSI reporting and PUSCH-based semi-persistent CSI reporting are realized in a case where the DCI format can schedule PUSCHs of multiple cells.

Embodiments of an eighth aspect

Embodiments of the present disclosure further provide a communication system, FIG.1 can be referred to, the contents same as the embodiments of the first to sixth aspects are not repeated.

In some embodiments, the communication system 100 at least may include a network device and a terminal equipment, wherein the network device is configured to perform the methods described in the embodiments of the second, fourth or sixth aspects; the terminal equipment is configured to perform the methods described in embodiments of the first, third or fifth aspects.

Contents about the network device and the terminal equipment have been described in detail in the embodiments of the first to sixth aspects, are incorporated here, and are not repeated here.

Embodiments of the present disclosure further provide a terminal equipment, but the present disclosure is not limited to this, it may also be other device.

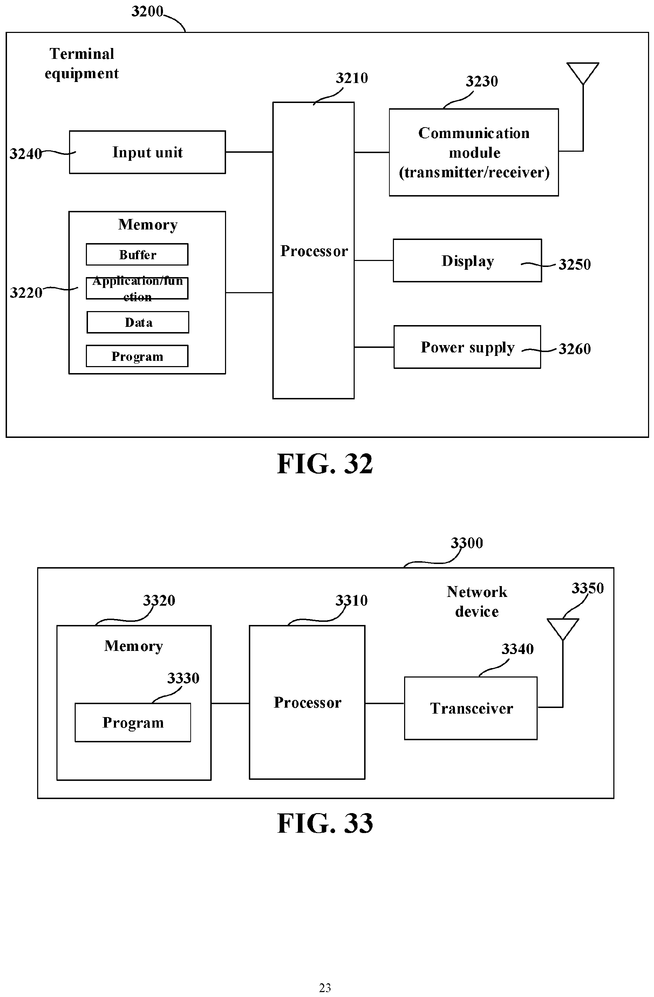

FIG. 32 is a schematic diagram of a terminal equipment in the embodiments of the present disclosure. As shown in FIG. 32, the terminal equipment 3200 may include a processor 3210 and a memory 3220; the memory 3220 stores data and programs, and is coupled to the processor 3210. It's worth noting that this figure is exemplary; other types of structures can also be used to supplement or replace this structure, so as to realize a telecommunication function or other functions.

For example, the processor 3210 may be configured to execute a program to implement the method described in the embodiments of the first, third or fifth aspect.

As shown in FIG. 32, the terminal equipment 3200 may further include: a communication module 3230, an input unit 3240, a display 3250 and a power supply 3260. The functions of said components are similar to prior arts, which are not repeated here. It's worth noting that the terminal equipment 3200 does not have to include all the components shown in FIG. 32, said components are not indispensable. Moreover, the terminal equipment 3200 may further include components not shown in FIG. 32, prior arts can be referred to.

Embodiments of the present disclosure further provide a network device, for example may be a base station, but the present disclosure is not limited to this, it may also be other network device.

FIG. 33 is a composition schematic diagram of a network device in the embodiments of the present disclosure. As shown in FIG. 33, the network device 3300 may include: a processor 3310 (such as a central processing unit (CPU)) and a memory 3320; the memory 3320 is coupled to the processor 3310. The memory 3320 may store various data; moreover, also stores a program 3330 for information processing, and executes the program 3330 under the control of the processor 3310.

For example, the processor 3310 can be configured to execute a program to implement the method described in the embodiments of the second, fourth or sixth aspect.

In addition, as shown in FIG. 33, the network device 3300 may further include: a transceiver 3340 and an antenna 3350, etc.; wherein the functions of said components are similar to relevant arts, which are not repeated here. It's worth noting that the network device 3300 does not have to include all the components shown in FIG. 33. Moreover, the network device 3300 may further include components not shown in FIG. 33, prior arts may be referred to.

Embodiments of the present disclosure further provide a computer program, wherein when a terminal equipment executes the program, the program enables the terminal equipment to execute the method described in the embodiments of the first third or fifth aspect.

Embodiments of the present disclosure further provide a storage medium in which a computer program is stored, wherein the computer program enables a terminal equipment to execute the method described in the embodiments of the first third or fifth aspect.

Embodiments of the present disclosure further provide a computer program, wherein when a network device executes the program, the program enables the network device to execute the method described in the embodiments of the second, fourth or sixth aspect.

Embodiments of the present disclosure further provide a storage medium in which a computer program is stored, wherein the computer program enables a network device to execute the method described in the embodiments of the second, fourth or sixth aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information

**EP 4 572 258 A1**

from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:

1. A method for reporting aperiodic CSI, wherein the method includes:

a terminal equipment receives a DCI format for scheduling a PUSCH on one or more than one cell and/or uplink carrier, the DCI format requesting or triggering aperiodic CSI reporting; and
the terminal equipment transmits a CSI report.

2. The method according to Supplement 1, wherein
the DCI format schedules a PUSCH on one cell and/or uplink carrier, and the terminal equipment transmits the CSI report on the one cell and/or uplink carrier.

3. The method according to Supplement 1 or 2, wherein
in a case where the DCI format requests or triggers aperiodic CSI reporting, the DCI format only schedules a PUSCH on one cell and/or uplink carrier.

4. The method according to Supplement 2, wherein

the DCI format comprises a field for indicating a cell and/or an uplink carrier, the field indicating one cell and/or uplink carrier; and
the terminal equipment transmits the CSI report on the cell and/or uplink carrier indicated in the field.

5. The method according to Supplement 2, wherein
the terminal equipment transmits the CSI report on a cell and/or uplink carrier that is default or configured by signaling and used for transmitting the CSI report.

6. The method according to Supplement 5, wherein
the DCI format comprises a field for indicating a cell and/or an uplink carrier, the field does not indicate a cell and/or uplink carrier.

7. The method according to Supplement 5, wherein
the DCI format comprises a field for indicating a cell and/or an uplink carrier, the terminal equipment ignores the field.

8. The method according to Supplement 1, wherein
the DCI format includes a field for requesting or triggering CSI reporting, which is located before a field for indicating a cell and/or uplink carrier.

9. The method according to Supplement 5 or 8, wherein
the DCI format does not include a field for indicating a cell and/or uplink carrier when requesting or triggering aperiodic CSI reporting.

10. The method according to any one of Supplements 5 to 9, wherein
the cell that is default and used for transmitting a CSI report is a Pcell or a PScell or a PUCCH Scell.

11. The method according to Supplement 1, wherein

the DCI format schedules PUSCHs on one or more than one cell and/or uplink carrier; and

the terminal equipment transmits the CSI report on one of the one or more than one cell and/or uplink carrier.

12. The method according to Supplement 1 or 2 or 11, wherein
the DCI format includes a field for requesting or triggering CSI reporting, a value of the field corresponds to a CSI aperiodic trigger state.

13. The method according to Supplement 12, wherein
a length of the field is configured by a higher-layer parameter, and the higher-layer parameter is DCI format specific or shared by the DCI format and other DCI format.

14. The method according to Supplement 12, wherein
a length of the field is determined by the terminal equipment according to the number of trigger states in a configured trigger state list.

15. The method according to Supplement 11, wherein
the one cell and/or uplink carrier is a cell and/or uplink carrier that is default or configured by signaling and used for transmitting a CSI report.

16. The method according to Supplement 15, wherein
the cell that is default and used for transmitting a CSI report is at least one of the following:

a cell with a smallest serving cell identification number in scheduled cells;
a cell where a first PUSCH satisfying a timing requirement for aperiodic CSI reporting in a time domain in a scheduled PUSCH is located; and
a cell with a smallest serving cell identification number in cells where a first PUSCH satisfying a timing requirement for aperiodic CSI reporting in a time domain in a scheduled PUSCH is located.

17. The method according to Supplement 15 or 16, wherein
the cell that is default and used for transmitting a CSI report is a Pcell or a PScell or a PUCCH Scell.

18. The method according to Supplement 1, wherein
the terminal equipment transmits the CSI report on a default PUSCH.

19. The method according to Supplement 18, wherein
the default PUSCH is at least one of the following:

a PUSCH of a cell with a smallest serving cell identification number in scheduled cells;
a first PUSCH satisfying a timing requirement for aperiodic CSI reporting in a time domain in a scheduled PUSCH; and
a PUSCH of a cell with a smallest serving cell identification number in cells where a first PUSCH satisfying a timing requirement for aperiodic CSI reporting in a time domain in a scheduled PUSCH is located.

20. The method according to Supplement 18 or 19, wherein
the cell where the default PUSCH is located is a Pcell or a PScell or a PUCCH Scell.

21. The method according to Supplement 15, wherein
the DCI format comprises a field for indicating a cell and/or an uplink carrier.

22. The method according to Supplement 21, wherein
the cell and/or uplink carrier that is default or configured by signaling and used for transmitting a CSI report is within a range of one or more cells and/or uplink carriers indicated in the field, or is not within the range of one or more cells and/or uplink carriers indicated in the field.

23. The method according to Supplement 1, wherein

the DCI format schedules PUSCHs on more than one cell and/or uplink carrier; and
the terminal equipment transmits the CSI report on one or more than one cell and/or uplink carrier of the more than one cell and/or uplink carrier.

24. The method according to Supplement 23, wherein
the DCI format comprises a field for indicating a cell and/or an uplink carrier, the field indicating the more than one cell and/or uplink carrier.

25. The method according to Supplement 23, wherein
the contents of the CSI reports on different PUSCHs are the same or different.

26. The method according to Supplement 23 or 25, wherein
the DCI format includes a field for requesting or triggering CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

27. The method according to Supplement 23 or 25, wherein

the DCI format includes multiple fields for requesting or triggering CSI reporting, different PUSCHs are respectively used to carry different CSI reports corresponding to trigger states associated with fields for requesting or triggering CSI reporting.

28. The method according to any one of Supplements 1 to 27, wherein

CRC of the DCI format is scrambled by a C-RNTI or by a MCS-C-RNTI.

29. The method according to any one of Supplements 1 to 28, wherein

the terminal equipment receives configuration information for configuring the terminal equipment to monitor the DCI format in a UE-specific search space.

30. The method according to any one of Supplements 1 to 29, wherein

the terminal equipment receives configuration information for configuring whether the DCI format supports triggering CSI reporting or whether the DCI format is used to trigger CSI reporting.

31. The method according to any one of Supplements 1 to 30, wherein

the terminal equipment receives configuration information for configuring a cell and/or uplink carrier that may be scheduled by the DCI format.

32. The method according to Supplement 1, wherein

the more than one uplink carrier belong to different cells respectively, or at least two of the more than one uplink carrier belong to different cells.

33. A method for receiving a CSI report, wherein the method includes:

   a network device transmits a DCI format for scheduling a PUSCH on one or more than one cell and/or uplink carrier, the DCI format requesting or triggering aperiodic CSI reporting; and
   the network device receives a CSI report.

34. The method according to Supplement 33, wherein

the DCI format schedules a PUSCH on one cell and/or uplink carrier, and the network device receives the CSI report on the one cell and/or uplink carrier.

35. The method according to Supplement 33 or 34, wherein

in a case where the DCI format requests or triggers aperiodic CSI reporting, the DCI format only schedules a PUSCH on one cell and/or uplink carrier.

36. The method according to Supplement 34, wherein

   the DCI format comprises a field for indicating a cell and/or an uplink carrier, the field indicating one cell and/or uplink carrier; and
   the network device receives the CSI report on the cell and/or uplink carrier indicated in the field.

37. The method according to Supplement 34, wherein

the network device receives the CSI report on a cell and/or uplink carrier that is default or configured by signaling and used for receiving the CSI report.

38. The method according to Supplement 37, wherein

the DCI format comprises a field for indicating a cell and/or an uplink carrier, the field does not indicate a cell and/or uplink carrier.

39. The method according to Supplement 37, wherein

the DCI format comprises a field for indicating a cell and/or an uplink carrier, the terminal equipment ignores the field.

40. The method according to Supplement 1, wherein

the DCI format includes a field for requesting or triggering CSI reporting, which is located before a field for indicating a cell and/or uplink carrier.

41. The method according to Supplement 37 or 40, wherein

the DCI format does not include a field for indicating a cell and/or uplink carrier when requesting or triggering aperiodic CSI reporting.

42. The method according to any one of Supplements 37 to 41, wherein

the cell that is default and used for receiving a CSI report is a Pcell or a PScell or a PUCCH Scell.

43. The method according to Supplement 33, wherein

   the DCI format schedules PUSCHs on one or more than one cell and/or uplink carrier; and
   the network device receives the CSI report on one cell and/or uplink carrier of the one or more than one cell and/or uplink carrier.

44. The method according to Supplement 33 or 34 or 43, wherein
the DCI format includes a field for requesting or triggering CSI reporting, a value of the field corresponds to a CSI aperiodic trigger state.

45. The method according to Supplement 44, wherein
a length of the field is configured by a higher-layer parameter, and the higher-layer parameter is DCI format specific or shared by the DCI format and other DCI format.

46. The method according to Supplement 44, wherein
a length of the field is determined by the terminal equipment according to the number of trigger states in a configured trigger state list.

47. The method according to Supplement 43, wherein
the one cell and/or uplink carrier is a cell and/or uplink carrier that is default or configured by signaling and used for receiving a CSI report.

48. The method according to Supplement 47, wherein
the cell that is default and used for receiving a CSI report is at least one of the following:

> a cell with a smallest serving cell identification number in scheduled cells;
> a cell where a first PUSCH satisfying a timing requirement for aperiodic CSI reporting in a time domain in a scheduled PUSCH is located; and
> a cell with a smallest serving cell identification number in cells where a first PUSCH satisfying a timing requirement for aperiodic CSI reporting in a time domain in a scheduled PUSCH is located.

49. The method according to Supplement 47 or 48, wherein
the cell that is default and used for receiving a CSI report is a Pcell or a PScell or a PUCCH Scell.

50. The method according to Supplement 1, wherein
the network device receives the CSI report on a default PUSCH.

51. The method according to Supplement 50, wherein
the default PUSCH is at least one of the following:

> a PUSCH of a cell with a smallest serving cell identification number in scheduled cells;
> a first PUSCH satisfying a timing requirement for aperiodic CSI reporting in a time domain in a scheduled PUSCH; and
> a PUSCH of a cell with a smallest serving cell identification number in cells where a first PUSCH satisfying a timing requirement for aperiodic CSI reporting in a time domain in a scheduled PUSCH is located.

52. The method according to Supplement 50 or 51, wherein
the cell where the default PUSCH is located is a Pcell or a PScell or a PUCCH Scell.

53. The method according to Supplement 47, wherein
the DCI format comprises a field for indicating a cell and/or an uplink carrier.

54. The method according to Supplement 53, wherein
the cell and/or uplink carrier that is default or configured by signaling and used for receiving a CSI report is within a range of one or more cells and/or uplink carriers indicated in the field, or is not within the range of one or more cells and/or uplink carriers indicated in the field.

55. The method according to Supplement 1, wherein

> the DCI format schedules PUSCHs on more than one cell and/or uplink carrier; and
> the network device receives the CSI report on one or more than one cell and/or uplink carrier of the more than one cell and/or uplink carrier.

56. The method according to Supplement 55, wherein
the DCI format comprises a field for indicating a cell and/or an uplink carrier, the field indicating the more than one cell and/or uplink carrier.

57. The method according to Supplement 55, wherein
the contents of the CSI reports on different PUSCHs are the same or different.

58. The method according to Supplement 55 or 57, wherein
the DCI format includes a field for requesting or triggering CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

59. The method according to Supplement 56 or 57, wherein

the DCI format includes multiple fields for requesting or triggering CSI reporting, different PUSCHs are respectively used to carry different CSI reports corresponding to trigger states associated with fields for requesting or triggering CSI reporting.

60. The method according to any one of Supplements 33 to 59, wherein CRC of the DCI format is scrambled by a C-RNTI or by a MCS-C-RNTI.

61. The method according to any one of Supplements 33 to 60, wherein the network device transmits configuration information for configuring the terminal equipment to monitor the DCI format in a UE-specific search space.

62. The method according to any one of Supplements 33 to 61, wherein the network device transmits configuration information for configuring whether the DCI format supports triggering CSI reporting or whether the DCI format is used to trigger CSI reporting.

63. The method according to any one of Supplements 33 to 62, wherein the network device transmits configuration information for configuring a cell and/or uplink carrier that may be scheduled by the DCI format.

64. The method according to Supplement 1, wherein the more than one uplink carrier belong to different cells respectively, or at least two of the more than one uplink carrier belong to different cells.

1'. A method for reporting semi-persistent CSI, wherein the method includes:

a terminal equipment receives a DCI format for scheduling a PUSCH on one or more than one cell and/or uplink carrier, the DCI format triggering or activating semi-persistent CSI reporting; and the terminal equipment transmits a CSI report.

2'. The method according to Supplement 1', wherein the DCI format schedules a PUSCH on one cell and/or uplink carrier, and the terminal equipment transmits the CSI report on the one cell and/or uplink carrier.

3'. The method according to Supplement 1' or 2', wherein in a case where the DCI format triggers or activates semi-persistent CSI reporting, the DCI format only schedules a PUSCH on one cell and/or uplink carrier.

4'. The method according to Supplement 2', wherein

the DCI format comprises a field for indicating a cell and/or an uplink carrier, the field indicating one cell and/or uplink carrier; and the terminal equipment transmits the CSI report on the cell and/or uplink carrier indicated in the field.

5'. The method according to Supplement 2', wherein the terminal equipment transmits the CSI report on a cell and/or uplink carrier that is default or configured by signaling and used for transmitting the CSI report.

6'. The method according to Supplement 5', wherein the DCI format comprises a field for indicating a cell and/or an uplink carrier, the field does not indicate a cell and/or uplink carrier.

7'. The method according to Supplement 5', wherein the DCI format comprises a field for indicating a cell and/or an uplink carrier, the terminal equipment ignores the field.

8'. The method according to Supplement 1', wherein the DCI format includes a field for requesting or triggering CSI reporting, which is located before a field for indicating a cell and/or uplink carrier.

9'. The method according to Supplement 5' or 8', wherein the DCI format does not include a field for indicating a cell and/or uplink carrier when triggering or activating semi-persistent CSI reporting.

10'. The method according to any one of Supplements 5' to 8', wherein the cell that is default and used for transmitting a CSI report is a Pcell or a PScell or a PUCCH Scell.

11'. The method according to Supplement 1', wherein

the DCI format schedules PUSCHs on one or more than one cell and/or uplink carrier; and the terminal equipment transmits the CSI report on one of the one or more than one cell and/or uplink carrier.

12'. The method according to Supplement 1' or 2' or 11', wherein
the DCI format includes a field for requesting or triggering CSI reporting, a value of the field corresponds to a CSI trigger state.

13'. The method according to Supplement 12', wherein
a length of the field is configured by a higher-layer parameter, and the higher-layer parameter is DCI format specific or shared by the DCI format and other DCI format.

14'. The method according to Supplement 12', wherein
a length of the field is determined by the terminal equipment according to the number of trigger states in a configured trigger state list.

15'. The method according to Supplement 11', wherein
the one cell and/or uplink carrier is a cell and/or uplink carrier that is default or configured by signaling and used for transmitting a CSI report.

16'. The method according to Supplement 15', wherein
the cell that is default and used for transmitting a CSI report is at least one of the following:

> a cell with a smallest serving cell identification number in scheduled cells;
> a cell where a first PUSCH satisfying a timing requirement for semi-persistent CSI reporting in a time domain in a scheduled PUSCH is located; and
> a cell with a smallest serving cell identification number in cells where a first PUSCH satisfying a timing requirement for semi-persistent CSI reporting in a time domain in a scheduled PUSCH is located.

17'. The method according to Supplement 15' or 16', wherein
the cell that is default and used for transmitting a CSI report is a Pcell or a PScell or a PUCCH Scell.

18'. The method according to Supplement 1', wherein
the terminal equipment transmits the CSI report on a default PUSCH.

19'. The method according to Supplement 18', wherein
the default PUSCH is at least one of the following:

> a PUSCH of a cell with a smallest serving cell identification number in scheduled cells;
> a first PUSCH satisfying a timing requirement for aperiodic CSI reporting in a time domain in a scheduled PUSCH; and
> a PUSCH of a cell with a smallest serving cell identification number in cells where a first PUSCH satisfying a timing requirement for aperiodic CSI reporting in a time domain in a scheduled PUSCH is located.

20'. The method according to Supplement 18' or 19', wherein
the cell where the default PUSCH is located is a Pcell or a PScell or a PUCCH Scell.

21'. The method according to Supplement 15', wherein
the DCI format comprises a field for indicating a cell and/or an uplink carrier.

22'. The method according to Supplement 21', wherein
the cell and/or uplink carrier that is default or configured by signaling and used for transmitting a CSI report is within a range of one or more cells and/or uplink carriers indicated in the field, or is not within the range of one or more cells and/or uplink carriers indicated in the field.

23'. The method according to Supplement 1', wherein

> the DCI format schedules PUSCHs on more than one cell and/or uplink carrier; and
> the terminal equipment transmits the CSI report on one or more than one cell and/or uplink carrier of the more than one cell and/or uplink carrier.

24'. The method according to Supplement 23', wherein
the DCI format comprises a field for indicating a cell and/or an uplink carrier, the field indicating the more than one cell and/or uplink carrier.

25'. The method according to claim 23', wherein,
the contents of the CSI reports on different PUSCHs are the same or different.

26'. The method according to Supplement 23' or 25', wherein
the DCI format includes a field for triggering or activating CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

27'. The method according to Supplement 23' or 25', wherein
the DCI format includes multiple fields for triggering or activating CSI reporting, different PUSCHs are respectively used to carry different CSI reports corresponding to trigger states associated with fields for requesting or triggering CSI reporting. 28'. The method according to any one of Supplements 1' to 27', wherein
CRC of the DCI format is scrambled by an SP-CSI-RNTI.
29'. The method according to any one of Supplements 1' to 28', wherein
the terminal equipment validates validity of the DCI format for semi-persistent CSI activation.
30'. The method according to Supplement 29', wherein
the terminal equipment validates the validity according to a field for indicating a cell and/or an uplink carrier and/or a field for indicating a HARQ process ID and/or a field for indicating a RV in the DCI format.
31'. The method according to Supplement 30', wherein
the DCI format includes multiple fields for indicating the HARQ process ID, and the terminal equipment validates the validity according to some or all of the fields for indicating a cell and/or uplink carrier in the DCI format.
32'. The method according to Supplement 30' or 31', wherein
the DCI format includes multiple fields for indicating the RV, and the terminal equipment validates the validity according to some or all of the fields for indicating the RV in the DCI format.
33'. The method according to any one of Supplements 30' to 32', wherein
the DCI format includes one or more fields for indicating a cell and/or uplink carrier, and the terminal equipment validates the validity according to some or all of the fields for indicating a cell and/or uplink carrier in the DCI format.
34'. The method according to any one of Supplements 30' to 33', wherein
if the DCI format is invalid, the terminal equipment ignores/discards the DCI format.
35'. A method for receiving a CSI report, wherein the method includes:

a network device transmits a DCI format for scheduling a PUSCH on one or more than one cell and/or uplink carrier, the DCI format triggering or activating semi-persistent CSI reporting; and
the network device receives a CSI report.

36'. The method according to Supplement 35', wherein
the DCI format schedules a PUSCH on one cell and/or uplink carrier, and the network device receives the CSI report on the one cell and/or uplink carrier.
37'. The method according to Supplement 35' or 36', wherein
in a case where the DCI format triggers or activates semi-persistent CSI reporting, the DCI format only schedules a PUSCH on one cell and/or uplink carrier.
38'. The method according to Supplement 36', wherein

the DCI format comprises a field for indicating a cell and/or an uplink carrier, the field indicating one cell and/or uplink carrier; and
the network device receives the CSI report on the cell and/or uplink carrier indicated in the field.

39'. The method according to Supplement 36', wherein
the network device receives the CSI report on a cell and/or uplink carrier that is default or configured by signaling and used for receiving the CSI report.
40'. The method according to Supplement 39', wherein
the DCI format comprises a field for indicating a cell and/or an uplink carrier, the field does not indicate a cell and/or uplink carrier.
41'. The method according to Supplement 39', wherein
the DCI format comprises a field for indicating a cell and/or an uplink carrier, the terminal equipment ignores the field.
42'. The method according to Supplement 35', wherein
the DCI format includes a field for requesting or triggering CSI reporting, which is located before a field for indicating a cell and/or uplink carrier.
43'. The method according to Supplement 39' or 42', wherein
the DCI format does not include a field for indicating a cell and/or uplink carrier when triggering or activating semi-persistent CSI reporting.
44'. The method according to any one of Supplements 39' to 42', wherein
the cell that is default and used for receiving a CSI report is a Pcell or a PScell or a PUCCH Scell.
45'. The method according to Supplement 35', wherein

the DCI format schedules PUSCHs on one or more than one cell and/or uplink carrier; and
the network device receives the CSI report on one of the one or more than one cell and/or uplink carrier.

46'. The method according to Supplement 35' or 36' or 45', wherein
the DCI format includes a field for requesting or triggering CSI reporting, a value of the field corresponds to a CSI trigger state.

47'. The method according to Supplement 46', wherein
a length of the field is configured by a higher-layer parameter, and the higher-layer parameter is DCI format specific or shared by the DCI format and other DCI format.

48'. The method according to Supplement 46', wherein
a length of the field is determined by the terminal equipment according to the number of trigger states in a configured trigger state list.

49'. The method according to Supplement 45', wherein
the one cell and/or uplink carrier is a cell and/or uplink carrier that is default or configured by signaling and used for receiving a CSI report.

50'. The method according to Supplement 49', wherein
the cell that is default and used for receiving a CSI report is at least one of the following:

a cell with a smallest serving cell identification number in scheduled cells;
a cell where a first PUSCH satisfying a timing requirement for semi-persistent CSI reporting in a time domain in a scheduled PUSCH is located; and
a cell with a smallest serving cell identification number in cells where a first PUSCH satisfying a timing requirement for semi-persistent CSI reporting in a time domain in a scheduled PUSCH is located.

51'. The method according to Supplement 49' or 50', wherein
the cell that is default and used for receiving a CSI report is a Pcell or a PScell or a PUCCH Scell.

52'. The method according to Supplement 35', wherein
the network device receives the CSI report on a default PUSCH.

53'. The method according to Supplement 52', wherein
the default PUSCH is at least one of the following:

a PUSCH of a cell with a smallest serving cell identification number in scheduled cells;
a first PUSCH satisfying a timing requirement for aperiodic CSI reporting in a time domain in a scheduled PUSCH; and
a PUSCH of a cell with a smallest serving cell identification number in cells where a first PUSCH satisfying a timing requirement for aperiodic CSI reporting in a time domain in a scheduled PUSCH is located.

54'. The method according to Supplement 52' or 53', wherein
the cell where the default PUSCH is located is a Pcell or a PScell or a PUCCH Scell.

55'. The method according to Supplement 49', wherein
the DCI format comprises a field for indicating a cell and/or an uplink carrier.

56'. The method according to Supplement 55', wherein
the cell and/or uplink carrier that is default or configured by signaling and used for receiving a CSI report is within a range of one or more cells and/or uplink carriers indicated in the field, or is not within the range of one or more cells and/or uplink carriers indicated in the field.

57'. The method according to Supplement 35', wherein

the DCI format schedules PUSCHs on more than one cell and/or uplink carrier; and
the network device receives the CSI report on one or more than one cell and/or uplink carrier of the more than one cell and/or uplink carrier.

58'. The method according to Supplement 57', wherein
the DCI format comprises a field for indicating a cell and/or an uplink carrier, the field indicating the more than one cell and/or uplink carrier.

59'. The method according to claim 57', wherein,
the contents of the CSI reports on different PUSCHs are the same or different.

60'. The method according to Supplement 57' or 59', wherein
the DCI format includes a field for triggering or activating CSI reporting, CSI reports on different PUSCHs are the same, and/or, different PUSCHs are respectively used to carry different CSI reports corresponding to trigger states associated with the field, and/or, different PUSCHs are respectively used to carry different parts of the CSI report.

61'. The method according to Supplement 57' or 59', wherein

the DCI format includes multiple fields for triggering or activating CSI reporting, different PUSCHs are respectively used to carry different CSI reports corresponding to trigger states associated with fields for requesting or triggering CSI reporting.

62'. The method according to any one of Supplements 35' to 61', wherein

CRC of the DCI format is scrambled by an SP-CSI-RNTI.

1". A method for releasing or deactivating semi-persistent CSI reporting, wherein the method includes:

a terminal equipment receives a DCI format for scheduling a PUSCH on one or more than one cell and/or uplink carrier, the DCI format releasing or deactivating semi-persistent CSI reporting; and
the terminal equipment deactivates the semi-persistent CSI reporting.

2". The method according to Supplement 1", wherein

the DCI format comprises a field for indicating a cell and/or an uplink carrier, the field indicating one cell or uplink carrier, and/or, a cell and/or uplink carrier indicated in the field is a Pcell or a PScell or a PUCCH Scell, and/or, the field is a specific value that does not correspond to any cell and/or uplink carrier.

3". The method according to Supplement 1" or 2", wherein

the terminal equipment validates validity of the DCI format for semi-persistent CSI releasing/deactivation.

4". The method according to Supplement 3", wherein

the terminal equipment validates the validity according to a field for indicating a cell and/or uplink carrier and/or a field for indicating a HARQ process ID and/or a field for indicating a RV and/or multiple fields for indicating a MCS and/or multiple fields for indicating frequency domain resource (RB) assignment in the DCI format.

5". The method according to Supplement 4", wherein

the DCI format includes multiple fields for indicating the HARQ process ID, and the terminal equipment validates the validity according to some or all of the fields for indicating a cell and/or uplink carrier in the DCI format.

6". The method according to Supplement 4" or 5", wherein

the DCI format includes multiple fields for indicating the RV, and the terminal equipment validates the validity according to some or all of the fields for indicating the RV in the DCI format.

7". The method according to any one of Supplements 4" to 6", wherein

the DCI format includes one or more fields for indicating a cell and/or uplink carrier, and the terminal equipment validates the validity according to some or all of the fields for indicating a cell and/or uplink carrier in the DCI format.

8". The method according to any one of Supplements 4" to 7", wherein

the DCI format includes multiple fields for indicating a MCS, and the terminal equipment validates the validity according to some or all of the fields for indicating a cell and/or uplink carrier in the DCI format.

9". The method according to any one of Supplements 4" to 8", wherein

the DCI format includes a field for indicating frequency domain resource (RB) assignment, and the terminal equipment validates the validity according to some or all of the fields for indicating a cell and/or uplink carrier in the DCI format.

10". The method according to any one of Supplements 4" to 9", wherein

if the DCI format is invalid, the terminal equipment ignores/discards the DCI format.

11". A method for releasing or deactivating semi-persistent CSI reporting, wherein the method includes:
a network device transmits a DCI format for scheduling a PUSCH on one or more than one cell and/or uplink carrier, the DCI format releasing or deactivating semi-persistent CSI reporting.

12". The method according to Supplement 11", wherein

the DCI format comprises a field for indicating a cell and/or an uplink carrier, the field indicating one cell or uplink carrier, and/or, a cell and/or uplink carrier indicated in the field is a Pcell or a PScell or a PUCCH Scell, and/or, the field is a specific value that does not correspond to any cell and/or uplink carrier.

1a. A terminal equipment, comprising a memory and a processor, the memory storing a computer program, and the processor being configured to execute the computer program to implement the method according to any one of Supplements 1 to 32, 1' to 34' and 1" to 10".

2a. A network device, comprising a memory and a processor, the memory storing a computer program, and the processor being configured to execute the computer program to implement the method according to any one of Supplements 33 to 64, 35' to 62' and 11" to 12".

3a. A communication system, comprising a network device and a terminal equipment, wherein the network device is configured to:

transmit a DCI format for scheduling a PUSCH on one or more than one cell and/or uplink carrier, the DCI format requesting or triggering aperiodic CSI reporting; and
receive a CSI report; and
the terminal equipment is configured to:

receive the DCI format; and
transmit the CSI report.

4a. A communication system, comprising a network device and a terminal equipment, wherein the network device is configured to:

transmit a DCI format for scheduling a PUSCH on one or more than one cell and/or uplink carrier, the DCI format triggering or activating semi-persistent CSI reporting; and
receive a CSI report; and
the terminal equipment is configured to:

receive the DCI format; and
transmit the CSI report.

5a. A communication system, comprising a network device and a terminal equipment, wherein the network device is configured to:

transmit a DCI format for scheduling a PUSCH on one or more than one cell and/or uplink carrier, the DCI format releasing or deactivating semi-persistent CSI reporting;
the terminal equipment is configured to:

receive the DCI format; and
deactivate semi-persistent CSI reporting.

**Claims**

1. An apparatus for reporting aperiodic channel state information, wherein the apparatus comprises:

a receiving unit configured to receive a DCI format for scheduling a physical uplink shared channel on one or more than one cell and/or uplink carrier, the DCI format requesting or triggering aperiodic channel state information reporting; and
a transmitting unit configured to transmit a channel state information report.

2. The apparatus according to claim 1, wherein,
the DCI format schedules a physical uplink shared channel on one cell and/or uplink carrier, and the transmitting unit transmits the channel state information report on the one cell and/or uplink carrier.

3. The apparatus according to claim 1 or 2, wherein,
in a case where the DCI format requests or triggers aperiodic channel state information reporting, the DCI format only schedules a physical uplink shared channel on one cell and/or uplink carrier.

4. The apparatus according to claim 2, wherein,

the DCI format comprises a field for indicating a cell and/or an uplink carrier, the field indicating one cell and/or uplink carrier; and
the transmitting unit transmits the channel state information report on the cell and/or uplink carrier indicated in the field.

5. The apparatus according to claim 2, wherein,
the transmitting unit transmits the channel state information report on a cell and/or uplink carrier that is default or configured by signaling and used for transmitting a channel state information report.

6. The apparatus according to claim 5, wherein,
the cell that is default and used for transmitting a channel state information report is a Pcell or a PScell or a PUCCH Scell.

7. The apparatus according to claim 1, wherein,

the DCI format schedules a physical uplink shared channel on one or more than one cell and/or uplink carrier; and
the transmitting unit transmits the channel state information report on one of the one or more than one cell and/or uplink carrier.

8. The apparatus according to claim 7, wherein,
the one cell and/or uplink carrier is a cell and/or uplink carrier that is default or configured by signaling and used for transmitting a channel state information report.

9. The apparatus according to claim 8, wherein,
the cell that is default and used for transmitting a channel state information report is at least one of the following:

a cell with a smallest serving cell identification number in scheduled cells;
a cell where a first physical uplink shared channel satisfying a timing requirement for aperiodic channel state information reporting in a time domain in a scheduled physical uplink shared channel is located; and
a cell with a smallest serving cell identification number in cells where a first physical uplink shared channel satisfying a timing requirement for aperiodic channel state information reporting in a time domain in a scheduled physical uplink shared channel is located.

10. The apparatus according to claim 8, wherein,
the cell that is default and used for transmitting a channel state information report is a Pcell or a PScell or a PUCCH Scell.

11. The apparatus according to claim 1, wherein,

the DCI format schedules physical uplink shared channels on more than one cell and/or uplink carrier; and
the transmitting unit transmits the channel state information report on one or more than one cell and/or uplink carrier of the more than one cell and/or uplink carrier.

12. An apparatus for reporting semi-persistent channel state information, wherein the apparatus comprises:

a receiving unit configured to receive a DCI format for scheduling a physical uplink shared channel on one or more than one cell and/or uplink carrier, the DCI format triggering or activating semi-persistent channel state information reporting; and
a transmitting unit configured to transmit a channel state information report.

13. The apparatus according to claim 12, wherein,
the DCI format schedules a physical uplink shared channel on one cell and/or uplink carrier, and the transmitting unit transmits the channel state information report on the one cell and/or uplink carrier.

14. The apparatus according to claim 12, wherein,
in a case where the DCI format triggers or activates semi-persistent channel state information reporting, the DCI format only schedules a physical uplink shared channel on one cell and/or uplink carrier.

15. The apparatus according to claim 13, wherein,

the DCI format comprises a field for indicating a cell and/or an uplink carrier, the field indicating one cell and/or uplink carrier; and

the transmitting unit transmits the channel state information report on the cell and/or uplink carrier indicated in the field.

16. The apparatus according to claim 13, wherein,

the transmitting unit transmits the channel state information report on a cell and/or uplink carrier that is default or configured by signaling and used for transmitting a channel state information report.

17. The apparatus according to claim 12, wherein,

a cyclic redundancy check of the DCI format is scrambled by an SP-CSI-RNTI.

18. The apparatus according to claim 12, wherein the apparatus further comprises:

a validating unit configured to validate validity of the DCI format for activation of semi-persistent channel state information.

19. The apparatus according to claim 18, wherein,

the validating unit validates the validity according to a field for indicating a cell and/or an uplink carrier and/or a field for indicating a hybrid automatic repeat request (HARQ) process ID and/or a field for indicating a redundancy version in the DCI format.

20. The apparatus according to claim 19, wherein,

the DCI format comprises multiple fields for indicating a redundancy version, and the validating unit validates the validity according to part or all of the fields for indicating the redundancy version in the DCI format.

**FIG. 1**

K2 slots
(take slot of PUSCH SubCarrier Spacing as baseline)

| PDCCH | PUSCH |
|---|---|
| DCI format 0_X | Aperiodic CSI report |

CRC is scrambled by C-RNTI or MCS-C-RNTI;
The CSI request field indicates which state is triggered

**FIG. 2**

K2 slots
(take slot of PUSCH SubCarrier Spacing
as baseline)          Cycle of SP CSI report

| PDCCH | PUSCH | PUSCH |
|---|---|---|
| DCI format 0_X | SP CSI report | SP CSI report |

CRC is scrambled by SP-CSI-RNTI;
The CSI request field indicates which state is triggered

**FIG. 3**

401

a terminal equipment receives a DCI format for scheduling a PUSCH on one or more than one cell and/or uplink carrier, the DCI format requesting or triggering aperiodic CSI reporting

402

the terminal equipment transmits a CSI report

# FIG. 4

Scell

...

Scell

PUSCH
Aperiodic CSI report

transmitting CSI report on the cell and/or uplink carrier indicated in the carrier indication field; This PUSCH carries or does not carry UL-SCH data

Pcell

PDCCH
DCI format 0_X

CRC is scrambled by C-RNTI or MCS-C-RNTI; The CSI request field indicates the triggered state; The carrier indication field indicates the cell and/or uplink carrier

Scell

...

Scell

Pcell

PDCCH
DCI format 0_X

PUSCH
Aperiodic CSI report

CRC is scrambled by C-RNTI or MCS-C-RNTI; The CSI request field indicates the triggered state; The carrier indication field indicates the cell and/or uplink carrier

transmitting CSI report on the cell and/or uplink carrier indicated in the carrier indication field; This PUSCH carries or does not carry UL-SCH data

**FIG. 5**

45

EP 4 572 258 A1

⋮

Scell

Scell

| PDCCH | | PUSCH | | PUSCH |
| DCI format 0_X | | Aperiodic CSI report | | UL-SCH |

Pcell

CRC is scrambled by C-RNTI or MCS-C-RNTI;
The CSI request field indicates the triggered state; The carrier indication field indicates the cell and/or uplink carrier

transmitting CSI report on the cell and/or uplink carrier indicated in the carrier indication field; This PUSCH carries or does not carry UL-SCH data

⋮

Scell

Scell

| PUSCH | | PUSCH |
| Aperiodic CSI report | | UL-SCH |

| PDCCH |
| DCI format 0_X |

Pcell

transmitting CSI report on the cell and/or uplink carrier indicated in the carrier indication field; This PUSCH carries or does not carry UL-SCH data

CRC is scrambled by C-RNTI or MCS-C-RNTI;
The CSI request field indicates the triggered state; The carrier indication field indicates the cell and/or uplink carrier

**FIG. 6**

:

| Scell |  |
|---|---|
|  |  |

| Scell |  |
|---|---|
|  |  |

| Pcell | **PDCCH** DCI format 0_X | **PUSCH** Aperiodic CSI report |
|---|---|---|

CRC is scrambled by C-RNTI
or MCS-C-RNTI;
The CSI request field indicates
the triggered state; The carrier
indication field indicates the
cell and/or uplink carrier

transmitting the CSI report
on the cell and/or uplink
carrier that is default or
configured via signaling
for transmitting the CSI
report; This PUSCH
carries or does not carry
UL-SCH data

:

| Scell |  |
|---|---|
|  |  |

| Scell |  | **PUSCH** Aperiodic CSI report |
|---|---|---|

| Pcell | **PDCCH** DCI format 0_X |
|---|---|

CRC is scrambled by
C-RNTI or MCS-C-
RNTI; The CSI request
field indicates the
triggered state; The
carrier indication field
indicates the cell and/
or uplink carrier

transmitting the CSI report
on the cell and/or uplink
carrier that is default or
configured via signaling
for transmitting the CSI
report; This PUSCH
carries or does not carry
UL-SCH data

**FIG. 7**

EP 4 572 258 A1

Scell

Scell

Pcell

| PDCCH | | PUSCH | | PUSCH |
|---|---|---|---|---|
| DCI format 0 X | | Aperiodic CSI report | | UL-SCH |

CRC is scrambled by C-RNTI or MCS-C-RNTI; The CSI request field indicates the triggered state; The carrier indication field does not indicate the cell and/or uplink carrier

transmitting the CSI report on the cell and/or uplink carrier that is default or configured via signaling for transmitting the CSI report; This PUSCH carries or does not carry UL-SCH data

Scell

Scell

Pcell

| PUSCH | | PUSCH |
|---|---|---|
| Aperiodic CSI report | | UL-SCH |

| PDCCH |
|---|
| DCI format 0 X |

CRC is scrambled by C-RNTI or MCS-C-RNTI; The CSI request field indicates the triggered state; The carrier indication field does not indicate the cell and/or uplink carrier

transmitting the CSI report on the cell and/or uplink carrier that is default or configured via signaling for transmitting the CSI report; This PUSCH carries or does not carry UL-SCH data

**FIG. 8**

Scell

Scell

| PUSCH |
| UL-SCH |

This PUSCH does not carry the CSI report triggered by this DCI

Pcell

| PDCCH | | PUSCH |
| DCI format 0_X | | Aperiodic CSI report |

CRC is scrambled by C-RNTI or MCS-C-RNTI; The CSI request field indicates the triggered state; The carrier indication field indicates the cell and/or uplink carrier

transmitting the CSI report on the cell and/or uplink carrier that is default or configured via signaling for transmitting the CSI report; This PUSCH carries or does not carry UL-SCH data

Scell

| PUSCH |
| UL-SCH |

This PUSCH does not carry the CSI report triggered by this DCI

Scell

| PUSCH |
| Aperiodic CSI report |

Pcell

| PDCCH |
| DCI format 0_X |

CRC is scrambled by C-RNTI or MCS-C-RNTI; The CSI request field indicates the triggered state; The carrier indication field indicates the cell and/or uplink carrier

transmitting the CSI report on the cell and/or uplink carrier that is default or configured via signaling for transmitting the CSI report; This PUSCH carries or does not carry UL-SCH data

**FIG. 9**

Scell

Scell

PUSCH
UL-SCH
This PUSCH does not carry the CSI report triggered by this DCI

Pcell

PDCCH
DCI format 0 X

PUSCH
Aperiodic CSI report

CRC is scrambled by C-RNTI or MCS-C-RNTI; The CSI request field indicates the triggered state; The carrier indication field indicates the cell and/or uplink carrier

transmitting the CSI report on the cell and/or uplink carrier that is default or configured via signaling for transmitting the CSI report; This PUSCH carries or does not carry UL-SCH data

Scell

PUSCH
UL-SCH
This PUSCH does not carry the CSI report triggered by this DCI

Scell

PUSCH
Aperiodic CSI report

Pcell

PDCCH
DCI format 0 X

CRC is scrambled by C-RNTI or MCS-C-RNTI; The CSI request field indicates the triggered state; The carrier indication field indicates the cell and/or uplink carrier

transmitting the CSI report on the cell and/or uplink carrier that is default or configured via signaling for transmitting the CSI report; This PUSCH carries or does not carry UL-SCH data

**FIG. 10**

Scell

Scell

Pcell | PDCCH | PUSCH
DCI format 0 X | Aperiodic CSI report

PUSCH
UL-SCH | This PUSCH does not carry the CSI report triggered by this DCI

CRC is scrambled by C-RNTI or MCS-C-RNTI;
The CSI request field indicates the triggered state;
The carrier indication field indicates the cell and/or uplink carrier

transmitting the CSI report on the default PUSCH; This PUSCH carries or does not carry UL-SCH data

Scell | PUSCH
UL-SCH | This PUSCH does not carry the CSI report triggered by this DCI

Scell | PUSCH
Aperiodic CSI report

Pcell | PDCCH
DCI format 0 X

transmitting the CSI report on the default PUSCH; This PUSCH carries or does not carry UL-SCH data

CRC is scrambled by C-RNTI or MCS-C-RNTI;
The CSI request field indicates the triggered state;
The carrier indication field indicates the cell and/or uplink carrier

# FIG. 11

Scell

Scell

Pcell

PUSCH
Aperiodic CSI report

This PUSCH carries or does not carry UL-SCH data

PDCCH
DCI format 0 X

PUSCH
Aperiodic CSI report

with same or different contents

This PUSCH carries or does not carry UL-SCH data

CRC is scrambled by C-RNTI or MCS-C-RNTI; One or more CSI request fields indicate the triggered state; The carrier indication field indicates the cell and/or uplink carrier

Scell

Scell

Pcell

PUSCH
Aperiodic CSI report

This PUSCH carries or does not carry UL-SCH data

with same or different contents

PUSCH
Aperiodic CSI report

This PUSCH carries or does not carry UL-SCH data

PDCCH
DCI format 0 X

CRC is scrambled by C-RNTI or MCS-C-RNTI; One or more CSI request fields indicate the triggered state; The carrier indication field indicates the cell and/or uplink carrier

# FIG. 12

1301

a network device transmits a DCI format for scheduling a PUSCH on one or more than one cell and/or uplink carrier, the DCI format requesting or triggering aperiodic CSI reporting

1302

the network device receives a CSI report

## FIG. 13

1401

a terminal equipment receives a DCI format for scheduling a PUSCH on one or more than one cell and/or uplink carrier, the DCI format triggering or activating semi-persistent CSI reporting

1402

the terminal equipment transmits a CSI report

## FIG. 14

11

EP 4 572 258 A1

Scell

Scell

Pcell

| PDCCH |
| DCI format 0_X |

CRC is scrambled by SP-
CSI-RNTI; The CSI request
field indicates the triggered
state; The carrier indication
field indicates the cell and/or
uplink carrier

——Cycle of SP CSI report——▶

| PUSCH |
| SP CSI report |

| PUSCH |
| SP CSI report |

transmitting CSI report on the cell
and/or uplink carrier indicated in
the carrier indication field; This
PUSCH carries or does not carry
UL-SCH data

Scell

Scell

Pcell

——Cycle of SP CSI report——▶

| PUSCH |
| SP CSI report |

| PUSCH |
| SP CSI report |

| PDCCH |
| DCI format 0_X |

CRC is scrambled by SP-
CSI-RNTI; The CSI request
field indicates the triggered
state; The carrier indication
field indicates the cell and/or
uplink carrier

transmitting CSI report on the cell and/
or uplink carrier indicated in the carrier
indication field; This PUSCH carries or
does not carry UL-SCH data

# FIG. 15

**FIG. 16**

EP 4 572 258 A1

⋮

Scell

Scell

Pcell

|—Cycle of SP CSI report—▶|

PDCCH
DCI format
0 X

PUSCH
SP CSI
report

PUSCH
SP CSI
report

CRC is scrambled by SP-CSI-RNTI; The CSI request field indicates the triggered state; The carrier indication field does not indicate the cell and/or uplink carrier

transmitting the CSI report on the cell and/or uplink carrier that is default or configured via signaling for transmitting the CSI report; This PUSCH carries or does not carry UL-SCH data

⋮

Scell

Scell

Pcell

|———Cycle of SP CSI report———▶|

PUSCH
SP CSI
report

PUSCH
SP CSI
report

PDCCH
DCI format
0 X

transmitting the CSI report on the cell and/or uplink carrier that is default or configured via signaling for transmitting the CSI report; This PUSCH carries or does not carry UL-SCH data

CRC is scrambled by SP-CSI-RNTI; The CSI request field indicates the triggered state; The carrier indication field does not indicate the cell and/or uplink carrier

**FIG. 17**

Scell

Scell

Scell

Pcell

| PDCCH | | | PUSCH | PUSCH | PUSCH |
| DCI format 0 X | | | SP CSI report | UL-SCH | SP CSI report |

Cycle of SP CSI report

CRC is scrambled by SP-CSI-RNTI; The CSI request field indicates the triggered state; The carrier indication field Does not indicate the cell and/or uplink carrier

transmitting the CSI report on the cell and/or uplink carrier that is default or configured via signaling for transmitting the CSI report; This PUSCH carries or does not carry UL-SCH data

Scell

Scell

Pcell

Cycle of SP CSI report

| PUSCH | PUSCH | PUSCH |
| SP CSI report | UL-SCH | SP CSI report |

| PDCCH | |
| DCI format 0 X | |

transmitting the CSI report on the cell and/or uplink carrier that is default or configured via signaling for transmitting the CSI report; This PUSCH carries or does not carry UL-SCH data

CRC is scrambled by SP-CSI-RNTI; The CSI request field indicates the triggered state; The carrier indication field does not indicate the cell and/or uplink carrier

# FIG. 18

Scell

Scell

PUSCH

UL-SCH | This PUSCH does not carry the CSI report triggered by this DCI

Cycle of SP CSI report

Pcell

PDCCH

DCI format 0_X

PUSCH

SP CSI report

PUSCH

SP CSI report

CRC is scrambled by SP-CSI-RNTI; The CSI request field indicates the triggered state; The carrier indication field indicates the cell and/or uplink carrier

transmitting the CSI report on the cell and/or uplink carrier that is default or configured via signaling for transmitting the CSI report; This PUSCH carries or does not carry UL-SCH data

Scell

PUSCH

UL-SCH | This PUSCH does not carry the CSI report triggered by this DCI

Cycle of SP CSI report

Scell

PUSCH

SP CSI report

PUSCH

SP CSI report

Pcell

PDCCH

DCI format 0_X

transmitting the CSI report on the cell and/or uplink carrier that is default or configured via signaling for transmitting the CSI report; This PUSCH carries or does not carry UL-SCH data

CRC is scrambled by SP-CSI-RNTI; The CSI request field indicates the triggered state; The carrier indication field indicates the cell and/or uplink carrier

**FIG. 19**

Scell

Scell

PUSCH

UL-SCH | This PUSCH does not carry the CSI report triggered by this DCI

|—Cycle of SP CSI report——▶|

Pcell

PDCCH
DCI format
0_X

PUSCH
SP CSI
report

PUSCH
SP CSI
report

CRC is scrambled by SP-CSI-RNTI; The CSI request field indicates the triggered state; The carrier indication field indicates the cell and/or uplink carrier

transmitting the CSI report on the cell and/or uplink carrier that is default or configured via signaling for transmitting the CSI report; This PUSCH carries or does not carry UL-SCH data

Scell

PUSCH
UL-SCH | This PUSCH does not carry the CSI report triggered by this DCI

|—Cycle of SP CSI report——▶|

Scell

PUSCH
SP CSI
report

PUSCH
SP CSI
report

Pcell

PDCCH
DCI format
0_X

CRC is scrambled by SP-CSI-RNTI; The CSI request field indicates the triggered state; The carrier indication field indicates the cell and/or uplink carrier

transmitting the CSI report on the cell and/or uplink carrier that is default or configured via signaling for transmitting the CSI report; This PUSCH carries or does not carry UL-SCH data

**FIG. 20**

EP 4 572 258 A1

⋮

Scell

Scell
| PUSCH | |
| UL-SCH | This PUSCH does not carry the CSI report triggered by this DCI |

├──Cycle of SP CSI report──▶

Pcell
| PDCCH | | PUSCH | | PUSCH |
| DCI format 0_X | | SP CSI report | | SP CSI report |

CRC is scrambled by
SP-CSI-RNTI; The CSI
request field indicates
the triggered state; The
carrier indication field
indicates the cell and/or
uplink carrier

transmitting the CSI
report on the default
PUSCH; This PUSCH
carries or does not carry
UL-SCH data

⋮

Scell
| PUSCH | |
| UL-SCH | This PUSCH does not carry the CSI report triggered by this DCI |

├──Cycle of SP CSI report──▶

Scell
| PUSCH | | PUSCH |
| SP CSI report | | SP CSI report |

Pcell
| PDCCH | |
| DCI format 0_X | |

transmitting the CSI report
on the default PUSCH; This
PUSCH carries or does not
carry UL-SCH data

CRC is scrambled by
SP-CSI-RNTI; The CSI
request field indicates
the triggered state; The
carrier indication field
indicates the cell and/or
uplink carrier

**FIG. 21**

Scell

Scell

Pcell

Cycle of SP CSI report

PUSCH
SP CSI report

This PUSCH carries or does not carry UL-SCH data

PUSCH
SP CSI report

PDCCH
DCI format 0_X

Cycle of SP CSI report

PUSCH
SP CSI report

with same or different contents

PUSCH
SP CSI report

CRC is scrambled by SP-CSI-RNTI; One or more CSI request fields indicate the triggered state; The carrier indication field indicates the cell and/or uplink carrier

This PUSCH carries or does not carry UL-SCH data

---

Scell

Scell

Pcell

Cycle of SP CSI report

PUSCH
SP CSI report

This PUSCH carries or does not carry UL-SCH data

PUSCH
SP CSI report

Cycle of SP CSI report

PUSCH
SP CSI report

with same or different contents

PUSCH
SP CSI report

This PUSCH carries or does not carry UL-SCH data

PDCCH
DCI format 0_X

CRC is scrambled by SP-CSI-RNTI; One or more CSI request fields indicate the triggered state; The carrier indication field indicates the cell and/or uplink carrier

**FIG. 22**

EP 4 572 258 A1

2301

a network device transmits a DCI format for scheduling a PUSCH on one or more than one cell and/or uplink carrier, the DCI format triggering or activating semi-persistent CSI reporting

2302

the network device receives a CSI report

**FIG. 23**

2401

a terminal equipment receives a DCI format for scheduling a PUSCH on one or more than one cell and/or uplink carrier, the DCI format releasing or deactivating semi-persistent CSI reporting

2402

the terminal equipment deactivates the semi-persistent CSI reporting

**FIG. 24**

2501

a network device transmits a DCI format for scheduling a PUSCH on one or more than one cell and/or uplink carrier, the DCI format releasing or deactivating semi-persistent CSI reporting

**FIG. 25**

20

2600

apparatus for reporting aperiodic CSI

2601

receiving unit

2602

transmitting unit

**FIG. 26**

2700

apparatus for receiving a CSI report

2701

transmitting unit

2702

receiving unit

**FIG. 27**

2800

apparatus for reporting semi-persistent CSI

2801

receiving unit

2802

transmitting unit

2803

validating unit

**FIG. 28**

2900

apparatus for receiving a CSI report

2901

transmitting unit

2902

receiving unit

**FIG. 29**

21

3000

apparatus for releasing or deactivating semi-persistent CSI reporting

3001

receiving unit

3002

processing unit

3003

validating unit

## FIG. 30

3100

apparatus for releasing or deactivating semi-persistent CSI reporting

3101

transmitting
unit

## FIG. 31

22

3200

Terminal equipment

3210

3230

3240 — Input unit

Processor

Communication module (transmitter/receiver)

Memory

Buffer

3220 — Application/function

Data

Program

Display — 3250

Power supply — 3260

**FIG. 32**

3300

Network device

3350

3320

3310

3340

Memory

3330

Program

Processor

Transceiver

**FIG. 33**

## INTERNATIONAL SEARCH REPORT

| | International application No. |
|---|---|
| | **PCT/CN2022/112293** |

| A. | CLASSIFICATION OF SUBJECT MATTER |
|---|---|
| | H04L27/00(2006.01)i |

According to International Patent Classification (IPC) or to both national classification and IPC

| B. | FIELDS SEARCHED |
|---|---|

Minimum documentation searched (classification system followed by classification symbols)

H04L, H04W, H04Q

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: 半持久, 半持续, 半永久, 调度, 多个, 非周期, CSI, 格式, 上报, 报告, 触发, 上行, 小区, 载波, 物理上行共享信道, carrier, cross, CSI, DCI, format, joint, PUSCH, SP, semi-persistent, report+, AP-CSI, A-CSI, aperiod+, trigger+, schedul+, cell+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112470517 A (SHARP KABUSHIKI KAISHA et al.) 09 March 2021 (2021-03-09) description, paragraphs [0015]-[0070] and paragraphs [0119]-[0129], claims 1-12, and figures 1 and 5 | 1-20 |
| Y | CN 112470517 A (SHARP KABUSHIKI KAISHA et al.) 09 March 2021 (2021-03-09) description, paragraphs [0015]-[0070] and paragraphs [0119]-[0129], claims 1-12, and figures 1 and 5 | 1-20 |
| X | CN 113796140 A (LG ELECTRONICS INC.) 14 December 2021 (2021-12-14) description, paragraphs [0051]-[0403], and figures 1-11 | 1-20 |
| Y | CN 113796140 A (LG ELECTRONICS INC.) 14 December 2021 (2021-12-14) description, paragraphs [0051]-[0403], and figures 1-11 | 1-20 |
| X | CN 111713069 A (SHARP KABUSHIKI KAISHA et al.) 25 September 2020 (2020-09-25) description, paragraphs [0034]-[0165], and figures 1-6 | 1-20 |
| Y | CN 111713069 A (SHARP KABUSHIKI KAISHA et al.) 25 September 2020 (2020-09-25) description, paragraphs [0034]-[0165], and figures 1-6 | 1-20 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 March 2023** | **17 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2022/112293** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022151620 A1 (HUAWEI TECHNOLOGIES CO., LTD.) 21 July 2022 (2022-07-21) <br> entire document | 1-20 |
| A | WO 2021147088 A1 (QUALCOMM INC.) 29 July 2021 (2021-07-29) <br> entire document | 1-20 |
| Y | FUJITSU. "Consideration on multi-cell PUSCH/PDSCH scheduling with a single DCI" <br> *3GPP TSG RAN WG1 #109-e R1-2205088*, 20 May 2022 (2022-05-20), <br> sections 2 and 3 | 1-20 |
| Y | NOKIA et al. "On multi-cell PUSCH/PDSCH scheduling with a single DCI" <br> *3GPP TSG RAN WG1 #109-e R1-2203276*, 20 May 2022 (2022-05-20), <br> sections 2-4 | 1-20 |

Form PCT/ISA/210 (second sheet) (July 2022)

**INTERNATIONAL SEARCH REPORT**
Information on patent family members

International application No.

**PCT/CN2022/112293**

| Patent document cited in search report | | | Publication date (day/month/year) | Patent family member(s) | | | Publication date (day/month/year) |
|---|---|---|---|---|---|---|---|
| CN | 112470517 | A | 09 March 2021 | WO | 2020017240 | A1 | 23 January 2020 |
| | | | | EP | 3824666 | A1 | 26 May 2021 |
| | | | | US | 2021320776 | A1 | 14 October 2021 |
| CN | 113796140 | A | 14 December 2021 | KR | 20210118201 | A | 29 September 2021 |
| | | | | WO | 2020226393 | A1 | 12 November 2020 |
| | | | | US | 2022264603 | A1 | 18 August 2022 |
| | | | | EP | 3937578 | A1 | 12 January 2022 |
| CN | 111713069 | A | 25 September 2020 | CA | 3091289 | A1 | 22 August 2019 |
| | | | | EP | 3753194 | A1 | 23 December 2020 |
| | | | | BR | 112020016028 | A2 | 08 December 2020 |
| | | | | WO | 2019160660 | A1 | 22 August 2019 |
| | | | | US | 2021014881 | A1 | 14 January 2021 |
| WO | 2022151620 | A1 | 21 July 2022 | WO | 2022151432 | A1 | 21 July 2022 |
| WO | 2021147088 | A1 | 29 July 2021 | EP | 4094391 | A1 | 30 November 2022 |
| | | | | CN | 114982181 | A | 30 August 2022 |
| | | | | IN | 202247034221 | A | 24 June 2022 |

Form PCT/ISA/210 (patent family annex) (July 2022)